# EUROPEAN PATENT APPLICATION

(11) **EP 3 190 579 A1**
(43) Date of publication of application: **12.07.2017**
(21) Application number: 15837586.5
(22) Date of filing: 03.09.2015
(51) Int. Cl.: G08G 5/06, G06Q 10/06

(54) **METHOD AND DEVICE FOR MANAGING TRAFFIC AT AN AERODROME**

(30) Priority: 04.09.2014 RU 2014135887
(71) Applicant: Otkrytoe Aktsionernoe Obschestvo "Kontsern "Mezhdunarodnye Aeronavigatsyonne Systemy", Moscow 127015 (RU)
(72) Inventor: NICHKOV, Sergei Anatolievich, Moscow 129281 (RU); DEMIDOV, Oleg Mihailovich, Moscow 121351 (RU); KIZILOV, Mihail Georgievich, Moscow 109542 (RU); KANEVSKY, Mihail Igorevich, Moscow 127572 (RU)
(74) Representative: Jeck, Anton
(86) International application number: PCT/RU2015/000556
(87) International publication number: WO 2016/036282

(57) **Abstract**

The invention consists of a method for managing traffic at an aerodrome with the aid of a device (1) for implementing the method, comprising, in a server (2), a data receiving device (3), an electronic computing means (4) and a viewing and control device (5) in the form of an interactive multitouch monitor, the screen (5a) of which allows the viewing of images of a three-dimensional virtual model, generated in a dynamic current time mode, of the real conditions at an aerodrome, and images of moving and stationary objects, instrumental in shaping the real conditions at an aerodrome, in elements of said three-dimensional model, obtained as a result of the virtual viewing of said model in current time from different selected viewing points in space with a different perspective and viewing angle for the possibility of an all-round view, and displayed on the screen in automatic mode or in a touch mode for calling images to the screen with the indication of elements of the objects and, associated with the images of the objects, images of indicator symbols of the current operating mode of an object, indicator symbols of the aerodrome traffic service and indicators of a violation of prescribed distances between objects in the form of connecting lines therebetween. The combination of images shown on the screen in dynamic mode makes it possible rapidly to identify situational conditions at an aerodrome and to select a sequence of resolutions for alarm situations and foreseeable conflict situations while observing traffic standards and maintaining the level of safety of moving objects.

## Description

### TECHNICAL FIELD

The invention relates to methods of traffic control at an aerodrome, represented by ground elements of the aerodrome structure and its air space. In particular, the invention relates to methods and devices for monitoring and controlling the aircraft and ground vehicles with account of the real situation at the aerodrome.

### BACKGROUND ART

The problem of safety, take-off, landing and maneuvering of aircraft is topical and includes a number of both organizational aspects related to the organization of a ground and air traffic at the aerodrome in order to avoid accidents, with the oversight of the technical condition of air transport and various ground vehicles, monitoring their compliance with the standards (rules) prescribed for their movement, compliance with timetables prescribed routes and locations at the aerodrome, as well as scientific and technical aspects of the traffic safety at the aerodrome.

It is well known that the aerodrome control activities should be aimed at controlling the situation at the aerodrome and traffic control of mobile objects, in particular, in the air traffic controller's responsibility when rendering the aerodrome supervisory control.

Known in the art are traditional methods of visual observation performed directly by air traffic controllers without using the control tower located at the aerodrome, and suffer from operational restrictions at poor conditions of the line of sight due to adverse weather conditions (fog, intense precipitation), and due to possible overlapping (shading) the observation by other objects.

Significant efforts of developers are focused on creation of combined methods of traffic control, combining modeling of the behavior of aircraft under real conditions and predicted conditions complicated by weather and vortex situation with a possibility of sending control commands for changing the earlier prescribed route, providing necessary maneuvering of aircraft at the aerodrome and during take-off and landing.

One of the aircraft safety aspects is to provide safety of aircraft take-off/landing and flight in the aerodrome airspace under conditions when the determinant of the level of flight safety is a possibility the aircraft may enter the wake vortex danger zone generated by an object in the vicinity of the aircraft and called the "vortex generator". The vortex generators are not only aircraft generating an aerodynamic jet with a high level of turbulence but also the surface objects streamlined by air flows having high turbulence or a vortex trail which can be dangerous to the aircraft. The set of points in space, in contact with which the aircraft is forced to a dangerous situation, is known as a "wake vortex danger zone".

The appearance in aviation of aircraft having wings with low elongation and high specific load resulted in an increase of the wake vortex intensity, which accordingly increases the danger of getting the aircraft therein.

Enter of an aircraft in the wake vortex danger zone generated by another object, such as another aircraft, can lead to a significant change in the angle of attack and slip. At the same time, the aircraft is acted by aerodynamic forces and moments that can, for example, throw it in the direction of the vortex generator wake with violation of the prescribed route of flight and the prescribed normal distances between the aircraft, which at low altitudes, such as landing or takeoff, lead to violation of the prescribed glide path take-off or landing and to emergency situations due to inability to compensate for such effects by the aircraft controls to perform evasive action to escape from the vortex wake danger zone.

Numerous studies of movement and attenuation of the vortices have shown that the atmospheric factors such as wind, wind shear, turbulence and stratification also play an important role in these processes.

There is a potential ability for optimizing the safety distances between the aircraft during landing, take-off and flight on the basis of a reliable prediction of the dynamics of the wake vortex based on the current and brief-term forecast of appropriate weather conditions, the effect of the weather conditions and the land proximity to the vortex wake dynamics.

Those skilled in the field of air traffic know that the trailing vortex position in space depends on the dynamics of changes in the environmental parameters and the position of the aircraft in space taking into account changes in its configuration and preset standards of the flight. Under changes of the configuration status of an aircraft there is understood, for example, a change in the operating conditions of the engines including a failure of one or more engines, a change in the aircraft geometry such as wing sweep, icing of the aircraft shell and other changes leading to a change in the air flow mode and, therefore, to a change in the aerodynamic forces and moments caused by the effect of aerodynamic disturbances, including wake vortex, as well as to a change in the aircraft capacity to compensate for these effects.

Therefore, the control of the movements at the aerodrome area is a very important task of providing the aircraft pilot and the controller with information on the position and configuration of the wake vortices that are dangerous for the aircraft of a definite type taking into account their movement in the aerodrome atmospheric conditions and the position of the aircraft at a predicted time of its motion at a low altitude in the aerodrome airspace.

Due to the fact that the enter of an aircraft of the vortex trail can lead to buffeting type phenomenon (frequency resonance excitation of the aircraft structural elements), uncontrolled angular rotation velocity at aircraft roll (200 degrees per second) with a loss of altitude (up to 150-200 meters), as well as loss of control of the aircraft, the international organization ISAO has been developed and introduced rules to improve the safety by determining a minimum distance between the first and second aircraft to ensure safe entry of the second aircraft in the trail generated by the first aircraft taking into account the design characteristics of the first and second aircraft and atmospheric conditions in the flight zone. In this case the specified minimum distances were imposed for the longitudinal separation. Further these rules have been subjected to repeated correction towards increasing the minimum distances, which led to the fact that now the main airports in the world, are at the limit of their handing capacity. None the less, the aircraft separation standards for the safe vortex conditions are obligatory when moving one after another during takeoff or landing on a single strip for one or two closely spaced parallel lines or in flight to each other at close altitude levels.

Known in the art is a method of controlling the vortex safety of aircraft during separation (US 2008030375, A1), in which the information on the leading and following aircraft and the weather data are used for a forecast of the future shape of the wake vortex position of the leading aircraft and a forecast of the future position of following aircraft; determine whether the future position of the following aircraft will cross the future predicted position of the wake vortex generated by the leading aircraft at the crossing point, and transmit a warning signal to air traffic control management concerning this crossing point; determine the correct course of following aircraft, consistent with the traffic, to evade the point of intersection with the wake vortices, and send the course correction to traffic control center. The decision-making system is not rapid; the decision on the course change is taken by the dispatcher traffic controller who informs the pilot of the following aircraft on corrected data of the following flight parameters. However, maneuvering with the time changed course and subsequent return to the originally predetermined course requires considerable space, time and fuel, and may lead to an undesirable increase in the distance between the aircraft and significant reduction aerodrome handing capacity.

It is known that the National Administration of Aeronautics and the US space program (NASA) attaches great importance to improve the efficiency of the aerodrome area, definitely during takeoff and landing of aircraft, and one of the research areas are works on creating a system of distribution vortex interval (AVOSS), which will combine the outputs of various systems and develop weather depending dynamic criteria of values of the wake vortex intervals (37th Aerospace Sciences Meeting & Exhibit, January 11-14, 1999, Reno, NV, NASA Langly Research Center, Hampton, VA). These systems represent current and forecasted weather conditions, wake vortex models move and its decay in these weather conditions from the ground to the height of the landing or take-off glide path, and to provide feedback wake vortex behavior in real time. The vortex behavior is compared with pre-defined dimensions of the safety corridor and determine the vortex dying, resulting in finding the required aircraft separation interval. If vortices persist longer than expected, a decrease in the intervals between aircraft take-off or landing is banned. At the same time, the vortex behavior is calculated on the set of "windows" approach on the height of the glide path to the end of the runway. However, this system has a number of limitations, such as lack of consideration of vertical wind shear, which can interfere with lowering or rising vortex, the absence of accounting a specific scale of turbulence required for the simulation vortex attenuation, and other limitations that can lead to emergency situation due to non-compliance of the preset parameters submitted to the controller and the actual vortex parameters of the vortex. In addition, the use of the AVOSS system will lead to increased load on the flight operators (controllers) that presently experience considerable emotional stress loads, and will intensify their work, what is undesirable since it increases a possibility of taking inadequate decisions by the controllers.

Also known in the art is an integrated system of aircraft wake vortex safety (RU, 2324953, C2), intended to provide safe operation of airborne vehicles (from hereon the aircraft) by warning and/or preventing emergency situations involving a possibility of getting an aircraft into the danger zone of a perturbed airflow - so called wake vortex generated by another object or a vortex generator (from hereon the VG), including a vortex in a flow streamlining the object. The system comprises information subsystems that provide fixing, storage and providing the user with information on alleged mutual disposition of the aircraft and dangerous aerodynamic forces acting on the aircraft, and moments induced by wake vortices of vortex generators, wake vortex zones at a forecasted time on proactive distance from the aircraft. The user defining the criteria of danger may be an aircraft crew and/or air traffic controller. This information can be visualized in a readable form in an amount sufficient to form a command by the controller to perform an avoidance maneuver by the aircraft from the wake vortex danger zone. The subsystem warning on a possibility for the aircraft to enter the vortex wake danger zone can be implemented using standard on-board and ground equipment, such as on-board inertial airborne navigation system (Airborne Inertial Navigation System (AINS), (Air Data Computer System (ADC), Doppler aircraft drift velocity system (Doppler system (DS), a forward view radar (FVR), and using information from the air traffic control (ATC), a single display system (United indication system (UIS), an information exchange multiplex channel (IEMC), as well as compatible information systems used in aircraft of other countries, such as Collision Avoidance System (TCAS), warning on the dangers of movement Traffic Alert, USA. The user subsystem placed on board of the aircraft, and at controller's display provides current correction available to the controller, information on the vortex setting touchdown area or landing, which increases the takeoff and landing safety and allows one to reduce the time interval between the aircraft when taking off or landing.

Also known in the art a vortex advisory system (US, 4,137,764 B1), in which the distance between aircraft separation near the runways is minimized by determining the severity of the existing wind conditions at a preselected trajectory point and forecasting the movement of wake vortices of the aircraft, in definite, by removing the vortex from the flight path at measured weather conditions. However, use of this system suggests a possibility of reducing the minimum distance between the aircraft depending on the actual weather conditions in each real situation that is unacceptable for the planning and scheduling operations in terms of mandatory compliance with established standards for the separation.

It is well known that the maneuver can be made consistent with a change in the value of the current speed of the aircraft, for example, calculated by a coordinated change in engine power or thrust to avoid the entrance into a dangerous trailing vortex danger zone or in a zone of turbulence (JP, 2000062698 A1).

Also known in the art is a method and device to create visual images of wake vortices by mathematical modeling them on the basis of the characteristics of the aircraft generating the vortex trail, taking into account the effect of weather conditions on the wake vortex state (US, 5,845,874, A). This device uses a fast reacting display that visualized simulated wake vortices from each aircraft located close to the protected aircraft. Moreover, the presence in the environment of the aircraft a large number of other aircraft, for example, near the aerodrome, the display will show a large number of simulated wake vortices that lead to difficulty in determining which of wake vortices poses to aircraft real danger and which ones can be ignored. However, such a system does not solve the problem of informing the pilot and air traffic controller on the dangers of falling into the predicted degree of swirl marks identified with a view of the flight altitude of aircraft and the rational maneuver the aircraft to avoid falling into the remaining vortex of the aircraft that landed earlier.

In addition, the above-described methods can provide the controller with visualization of not real but predicted situations that require pilot inferences to exclude entry to the predicted risk by changing the flight characteristics of the maneuver of evasion to change the course and/or the provisions of aircraft in space in the range agreed the controller, leading to a danger of a significant impact on the process of flight by the "human factor" caused by the pilot and flight controller experience and their ability to take quick independent decisions without ensuring compliance with the requirements of separation and to ensure the required safety level aerodrome airspace at a resolution conflict situations in real time in a real situation.

Another aspect of the safety of air transport is to provide their safety in terms of take-off/landing movement of different vehicles in the terrestrial space of the aerodrome area.

There are known various methods for observation, monitoring and management of ground movement in the aerodrome zone. Moreover, all known methods for controlling the movement of ground facilities include sending by the controller commands to the vehicles via audio channels of audio communication in the form of text information whose intelligibility largely depends on the noise and weather conditions. In addition, methods of control used in the above methods of observation, based on oral reports from the crew through the communication channels are not objective, and in some cases in the aviation history led to catastrophes.

Known in the art is a method for controlling aircraft on the ground (RU 2369908, C1), in which each aerodrome element, which is viewed on the screen of the airplane dashboard is provided with a service log which includes information related to said element that makes it possible to play definitely readable and clear images on said screen enabling the pilot to easily determine himself the his way to the aerodrome while taxiing said airplane. Use is made of a device searching aerodrome elements that are displayed on the screen. There are means for checking whether each of said elements forms a part of the first group for which the primary anchor point is within the zone of the log-books, or the second group, for which the main anchor point is located outside the area of the forms. There are also means for determining the anchor point of the elements of the second group located at the intersection of the axis of said member and the zone of log-books, and means for displaying on the screen each element of the service log containing data relating to said element. The log-books relating to the first group, located in the main point, and log-books related to the second group are in an additional reference zone. The method avoids excessive overload of the display field but it is difficult to implement. Furthermore, the method for monitoring surface movement by tracking the real current situations with numerous radio-electronic equipment (radars, rangefinders, communication radio stations) requires a permit for use of many radio frequencies, and there is possible shading of one object by another, as well as false marks due to the presence of side lobes of the antenna locator. The controller's decisions may depend on indications of the aircraft onboard equipment depending on the visibility conditions at the aerodrome.

To provide the safety of movement of the airplanes at the aerodrome it is necessary to monitor the position and movement of support vehicles such as mechanisms performing maintenance work at the aerodrome, aircraft refueling and other necessary jobs, as well as servicing vehicles performing delivery cargos and people.

Before occupying take off or landing position the airplane pilot should check the position of the aircraft with respect to visually distinguishable boundaries of the runway, steering track and parking places that is provided with lighting sources on their boundaries, and the control of serviceability of the lighting equipment is also included in the scope of responsibility of the controller. Moreover, there are standards of permissible faults in the lighting equipment, in which the functioning of the working lighting equipment ensures safety of the aircraft during takeoff/landing and maneuvering within the aerodrome area. Excessive lighting equipment failures above the standard movement of aircrafts in the runways should be stopped resulting in the need to re-approach maneuver of the inbound aircraft or to a ban of take-off or landing.

Also known in the art is a method of controlling the surface movement of aircraft and mechanical vehicles (RU, 2080033, C1) including: determining the vehicle position in the path of its movement using touch signals; inclusion of an optical tracking signal and a stop barrier; automatic warning signaling before entering the runway at an unauthorized crossing of the stop barrier switching floodlights installed with overlapping the fields of view of the pilot. In so doing the sound and light alarms in the control room are automatically activated. The process is designed so as to provide an emergency stop of the vehicles trying their incursion, for example, to the aerodrome runway. However, application of this method is limited due to dependence on weather conditions at the aerodrome area: with a decrease in the visibility aerodrome controller must take measures for emergency maneuvering not only one aircraft, but other aircraft and ground vehicles, which requires time-consuming and leads to delays in departures.

There is known a method of observation of the surface of movement of objects within a specified aerodrome area provided with runways, taxiways and aircraft parking and servicing equipment (RU, 2521450, C2), in which use is made of an optical fiber cable connected to a sensitive coherent OTDR as a virtual touch for detecting vibration of moving objects on the protected surface area within a specified aerodrome area. In this case the sensitive fiber optic cable is made continuous, buried in the ground near the boundaries of the runways, taxiways and aircraft stands and serving equipment or concrete surface runways, taxiways and parking areas, and crosses at least once the runway and/or taxiway and/or aircraft parking areas and/or servicing equipment, or arranged in a zigzag mode along the runways, taxiways and aircraft stands and serving equipment. In so doing measurements are made of the amplitude and phase of the detected vibration and performing joint digital processing of the received data to track in real time the parameters of movement of the moving objects, their relative position and the position with respect to specific points on the topographic surface of the protected area. Furthermore, in the process of monitoring the surface movement of moving objects they are identified by aircraft types based on epy vibration spectra algorithms in the known operation mode of the engines, for example, at idle revolutions, and serving equipment based on the engine speed frequency in the characteristic modes, such as in an idle mode. The system of monitoring the surface movement of moving objects within a specified aerodrome area includes a sensitive fiber optic cable connected to a coherent OTDR and located within the specified aerodrome area along the runways, taxiways and aircraft parking areas and/or servicing equipment, and location-sensitive fiber-optic cable in terms of repeating arrangement configuration of runways, taxiways and aircraft stands and serving equipment. However, the methods of observation using vibration measurements in a wide range of sensitive areas, require that the controller should identify the situation at the aerodrome after the analysis of a huge volume of information received through the communication channels or presented in the form of text boxes on the screen and recalled from memory, that is time consuming and leads to a rapid accumulation of fatigue of the controller.

Known in the art is an air traffic control system (US 2009143968, A1), comprising a processor, memory, a power electronic flight data source, a touch screen device, a keyboard, a trackball/keypad, and means for tracking, recording, communication and organization of electronic flight data with respect of aerodrome surface space, comprising:
- displaying an aerodrome surface as an aerodrome surface map on said touch entry visualization device;
- displaying flight data information as a color coded fight data element on said aerodrome surface map;
- associating said flight data element with an aircraft location on said aerodrome surface map;
- moving said flight data element by touching and dragging said flight data element to a desired location on said aerodrome surface map;
- displaying a complete flight information for aircraft in the area of reading data;
- using a set of touch activated buttons displayed on said aerodrome surface map to change an aircraft's runway assignment, intersection assignment, or other flight data attributes, to indicate a TIPH or departure clearance, and to transfer flight data between controller positions and air traffic facilities;
- designating zones on said aerodrome surface map where said flight data elements be linked together in a chain;
- using areas on the map, which indicated the flight data elements related to each other in turn;
- using a system information window on said aerodrome surface map to display the current date, time, and Automatic Aerodrome Information Service (ATIS) code;
- using a set of reminders that include an ATIS update status indication, generic and aircraft associated timers, generic and specific highlighted critical information, a taxi-into-position-and-hold indication, an aircraft associated runway spacing timer, aircraft delay status information, and an expected departure clearance time; and linking ground controller and local controller displays such that changes made to a flight data element on one display is reflected on the other.

In this step of the flight information display element in the form of color coded flight data on the aerodrome map further comprises:
- displaying a pending flight data element at a ground controller's position for a departing aircraft on said aerodrome surface map at said aircraft's designated ramp spot, said pending flight data element contains flight data attributes comprising said aircraft's call sign, type, first departure fix, runway assignment, intersection assignment, proposed departure time or expected departure clearance time, ATIS update indicator, flight data update indicator, timer indicator, and delay status indicator;
- displaying said pending flight data element as an outbound flight data element at said ground controller's position and said local controller's position for said departing aircraft when a ground controller moves said pending flight data element out of said ramp spot onto said aerodrome surface map, said outbound flight data element contains flight data attributes comprising said aircraft's call sign, type, first departure fix, runway assignment, intersection assignment, assigned taxi time or expected departure clearance time, ATIS update indicator, flight data update indicator, timer indicator, and delay status indicator;

However, displaying flight elements on the aerodrome surface map without imaging a ratio of height position of the objects between themselves and the above airdrome terrain relief does not allow the operator to quickly assess the situation and take a quick decision on the selection of the control command. Furthermore, loading the operator with a considerable amount stepwise verbal and digital information on the flight data for each aircraft in multiple windows significantly distracts the operator's attention from monitoring the compliance of the real data of the controlled object prescribed visualized flight data and, in addition, makes it necessary to identify by the operator (controller) the situation on the basis of logical alignment of the received information by criteria of its importance for the resolution of a possible conflict, which also takes time. In addition, the forced transfer of the flight elements on the screen does not reflect the real status of this element at the aerodrome.

Therefore, it is very relevant to improve the air traffic service technology using advanced tools and methods for traffic monitoring and control to provide the required level of safety and handing capacity of aerodromes, as well as increased efficiency in the air traffic.

### SUMMARY OF THE INVENTION

Those skilled in the field of air traffic organization understand that the main obstacles in way of controlling and routing mobile objects at include the following:
- the absence of visibility at the aerodrome because of the weather conditions (fog, etc.);
- limits of time in radio communication due to a large amount of information to be transmitted;
- the presence of artificial obstacles hindering the direct observation of the viewed place;
- restricted visibility at night;
- the presence of tall obstacles at the approach and departure areas to be taken into account when calculating the standard minimum distances and intervals of movement, thus complicating the solution of the traffic control problem associated with conflict situations at the aerodrome;
- the absence of visible information on the movements of wake vortex danger areas induced by vortex generators including take-off/landing of aircraft and tall obstacles.

In addition at movement of aircraft at the aerodrome there should be excluded any possibility of conflict situations and accidents caused by collisions of the aircraft with auxiliary vehicles moving on the aerodrome, taking into account the time change, the route and direction of their movement, and their presence on the runway and surfaces of aircraft maneuvering, for example, in case of a sudden unauthorized stop due to malfunctions.

Furthermore, the aerodrome controller must be informed on the available steering tracks, parking places and maneuvering areas for aircraft, free of obstacles and acceptable for maneuvering of the aircraft a certain type for conflict resolution, and eliminating the consequences of such situations or consequences of accidents, at a controlled movement of vehicles with minimal downtime.

In addition the controller should be capable of controlling the movement only of objects with well-functioning system of control of their movement and a system of two-way communication with them, in full awareness of the situation in his area of responsibility, and around the mobile object and be provided with a possibility of correcting the routes of movement and maneuvering action with awareness on the situation in the neighboring areas of responsibility of other controllers. At the same time, in case of a fault in the movement control system and communication system, the controller guiding an approaching aircraft must quickly decide to allow its landing, taking into account available aerodrome runways.

It is well known that making decisions in an emergency situation is the most difficult task in the controller activity. Such a decision consists of two steps: recognition of the situation and determining an order of actions to eliminate it. Before performing each next step the controller must anticipate his next actions

It is also known that the perception of speech signals in the verbal form or text signals visualized on a display requires certain time necessary and sufficient for the subsequent identification of the situation and making a decision under conditions of time handicap. The controller preferably should be provided with information necessary for decision-making in the form of easily recognizable appearance of the controlled mobile object with indication of the normal mode or warning alarm indication of the status and position of the controlled object.

Provision of the controller with additional time for decision-making should be followed by indication of the mobile being at this moment in a boundary position: from the appearance of a predicted conflict situation till its actual occurrence that can be achieved by eye-catching indication of the mobile object in the space within its prescribed safety zone. The time of perception of images (screen icons) associated in the controller's mind with a certain known object is much smaller than the perception of textual information, and identification of the situation at different indication of the selected zones at the aerodrome improves the adequacy of the taken decision.

The purpose of creating this invention is to improve the traffic safety at the aerodrome while providing concerted actions of the air traffic controllers, aircraft pilots and ground vehicle drivers on observing prescribed standards of movement and performing corrections of the position, movement parameters and state of the aircraft and ground vehicles necessary for their safe movement.

The inventors had a technical problem of creating a method for traffic control at an aerodrome providing:
- elimination of the dependence of the controller decisions on the direct visibility conditions and weather conditions at the aerodrome;
- providing the controller in the current time dynamic mode with visualized results of adequate simulation of a real situation at the aerodrome including modeling the location and movement of real objects, weather conditions and vortex situation; providing the controller with earliest possible visual identification of objects in a real monitored area and a possibility of selection of a scope of view, direction and field of vision of the monitored area optimal for identification of the object, its location at the aerodrome and provision of a possibility of comprehensive overview of real monitored mobile objects in the shaded parts of the structural elements of the aerodrome;
- a possibility of operative establishment of two-way communication via generated models with real mobile objects, regardless of the weather conditions at the aerodrome;
- a possibility of continuous monitoring the position, route and movement parameters of the aircraft and ground vehicles and cases of forecasted unfavorable combination of their positions at the aerodrome, their movement parameters, the weather parameters and vortex situation at the aerodrome and in the surrounding areas, which can lead to conflict situations and threat of safety to the mobile objects under conditions of continuous visualization of the results of evaluation of the real situation in terms of safety of movement of the mobile objects;
- possibility of excluding deviations of mobile objects from their prescribed traffic routes and crossing their routes or the agreed correction for prevention of potential conflicts because of violation of safe distances and intervals at movement;

An expected technical result was an increase of the traffic safety at the aerodrome due to formation of situational awareness of the traffic service controllers on the movement of mobile objects at the aerodrome regardless of the weather conditions in the aerodrome area and the conditions of the direct visibility conditions due to the ability of the controller to effect the route and movement parameters of the mobile objects in current time.

The in view task was achieved by developing a method for controlling the traffic at an aerodrome in real current time including, in which use is made of communication channels for receiving surveillance and traffic control information, including:
- data on the type of aircraft at the aerodrome and those
   forecasted for arrival, their order and schedule of takeoffs and landings and their prescribed flight tracks;
- data on the type, prescribed routes, time and area of
   movement of ground vehicles at the aerodrome;
- data on the real and forecasted weather conditions at the aerodrome and in the adjacent areas;
- data on operability of radio, lighting and auxiliary equipment at the aerodrome;
- analysis and systematization of the received information, for forming and visualizing the data for the traffic controller by means of a visualization and control device made in the form of a monitor with a screen and a touch control system, data on the situation at the aerodrome and on the mobile objects, said data including:
- brief and expanded log-books of aircraft containing data to be monitored by the controller;
- information on the type, parameters, status and routes of aircraft at the aerodrome;
- timetables and flight plans of aircraft at the aerodrome;
- data blocks on the real and forecasted weather conditions at the aerodrome and in the adjacent areas;
- data blocks on the operability of radio, lighting and auxiliary equipment;
- monitoring of the real situation at the aerodrome in the current real time by checking the compliance of the type, parameters and routes of said mobile objects according to the prescribed data;
- traffic control by rendering the aerodrome supervisory control to real mobile objects in accordance with a predetermined algorithm of technological service, while forming and transmitting to the mobile objects whose type, parameters and traffic routes do not meet the prescribed data, control commands for organization of their movement and resolving predicted conflict situations at the aerodrome taking into account the real meteorological conditions and criteria established by the traffic safety standards at said aerodrome,
wherein according to the invention:
- said visualization device is device comprising an interactive multi-touch monitor with a screen and a control system providing operation of a human-machine interface;
- receiving in the real-time mode additional data on preset safety criteria at the aerodrome and the admissible deviations from the movement parameters of mobile objects with respect to the standard values;
- receiving in the real-time mode via digital communication channels additional data on the objects forming a real situation at the aerodrome using digital communication channels from ground-based detection means, from multi-position surveillance system, from mobile objects, including aircraft and ground vehicles at the aerodrome and in adjacent areas, said data including:
   - data on the location of the structural elements of the aerodrome in the geographic coordinate system;
   - data on the operational status of stationary ground objects including at least structures, aprons, parking areas, maneuvering area, taxiways and runways;
   - data on the real current state of the mobile objects and the coordinates of their location at the aerodrome;
   - data on the prescribed size and configuration of the safety buffer zone around each mobile object;
   - data on the real routes of movement of the mobile objects at the aerodrome;
   - data on the current condition and location coordinates of the meteorological objects and turbulence zones in the aerodrome space including meteorological objects of natural origin and the turbulence zones of an anthropogenic origin;
   - processing, analysis and aggregation of the received data on the objects that form a real situation at the aerodrome in the dynamic real-time mode:
      - processing the standard safety criteria of the mobile objects at the aerodrome, including aircraft and ground vehicles, and forming for each of these types of mobile objects additional information blocks, including at least:
         - database of standard movement parameters of mobile objects of different types at a definite aerodrome;
         - database of admissible deviation from the standard safety distances of moving mobile objects of different types at a definite aerodrome;
         - Database of standard parameters of buffer safety zones of mobile objects of various types;
         - database of standard criteria for safety assessment of mobile objects of different types at a definite aerodrome at non-observance by a mobile object of the standard movement parameters and safe distances between the mobile objects and between mobile and stationary objects at the aerodrome;
         - brief log-books are made of the stationary ground objects, containing information on their type, location and operational status;
         - the coordinates of boundaries of the stationary ground objects at the aerodrome are determined;
         - forming around the mobile objects their buffer safety zone having prescribed shape and size;
         - forming coordinates of boundaries of the buffer zone of safety of mobile objects;
         - forming three-dimensional areas of meteorological objects and turbulence zones and brief log-books comprising information blocks on the type, condition and coordinates of the movement parameters of said meteorological objects and turbulence zones;
         - determining the coordinates of the boundaries of meteorological objects and turbulence zones dangerous for movement of said mobile objects at the aerodrome;
         - evaluating the predicted danger for movement of the mobile objects at the aerodrome at the predicted violation of buffer safety zone boundaries of the mobile objects during their movement along the routes, including the predicted intersection of the boundaries of the buffer safety zone with the boundaries of buffer safety zones of other mobile objects and/or the boundaries of said stationary surface objects and/or the boundaries of dangerous meteorological objects and turbulence zones;
         - determining the current operation mode of each of the mobile objects involved in forming the real situation at the aerodrome, on the basis of definite criteria for evaluating the predicted danger movement of the mobile objects at the aerodrome taking into account the origin of the situation, which can lead to loss of the safety level of their movements at the aerodrome in terms of conditions characterizing the operation mode of each specific object selected from the group including:
            - normal mode;
            - predictable alarm mode;
            - alarm mode;
            - emergency mode;
            - detected conflict mode;
            - Each object involved in forming a real situation at the aerodrome has coded information blocks containing a code list of modes of operation of said object including mode codes other than the normal mode;
            - providing visualization of said coded information block and automatic indication of the code of the current object by a touch call of said coded information block on said screen;
            - analysis of the predicted and real situation at the aerodrome by the criteria for evaluating the risk of the predicted conflict between the mobile objects at the aerodrome, arriving and/or departing from it;
            - mobile objects granted for the aerodrome supervisory control is provided with expanded support log-books including parameters of the current operation mode and state of the object at the aerodrome, and other information related to the movement of the mobile object at the aerodrome to provide its position in accordance with the requirements of the technological processes at different steps of the aerodrome supervisory control;
            - the results of processing said data are used for forming in the current time dynamic mode a three-dimensional virtual model of the real situation at the aerodrome, having in the aerodrome structure at least mobile and stationary objects, characterizing the real situation at the aerodrome, while providing at least:
               - coupling the checkpoint of the coordinate numeration of said virtual model to a point of the geographic coordinate system;
               - a possibility of changing the orientation of said virtual model in space by turning said model as a whole or its part about said coordinate numeration checkpoint;
               - a possibility of virtual sighting of said virtual model as a whole and at least a part thereof corresponding to the scope of view selected by the controller with a varying shooting angle and a varying observation angle of the sighting points located at different points in space;
               - providing visualization of the images of said virtual model or its part with images of the objects involved in forming the real situation at the aerodrome resulting from said sighting of said virtual model on the screen of the interactive multi-touch monitor in the dynamic mode, with binding the coordinates of these objects to the coordinate system of said virtual model, including:
                  - images of the stationary ground objects including objects that may be potential generators of turbulence zones dangerous for takeoff, landing and maneuvering of aircraft and/or an obstacle to monitoring the aerodrome traffic, made with linking to said images of the stationary ground objects and the images of the corresponding brief log-books by calling them to the screen by a touch action;
                  - images of the parking areas, aprons, maneuvering areas, taxiways and runways at the aerodromes including their boundaries, with a possibility of indication of their elements on the screen, said images are implemented:
                     - with linking to the images of said territories of linear images authorized by the controller managing the routing of air and ground movement of the mobile objects with automatic visualization simultaneously of the movement of the object along the route introducing therein digital images with points of movement of the mobile object control along the route in accordance with a preset technical service algorithm in a step by step mode with subsequent automatic withdrawal of the images of the passed checkpoints and linear image sectors of the route from the screen;
                     - with linking to the imagery of the runway area an image of the holding take-off position and the line-up take-off position of the aircraft with a touch call of a pop-up window with an image of said information block on wind direction and velocity and a touch call to display of the graphical wind direction indicator;
                     - with a possibility of indication of the territory images in color with brightness and character of the indication corresponding to the current operation mode of said territory with a possibility of touch activation of said indication in case of operation of the territory in a normal mode or with automatic activation of the indication in case of operation of the territory in a mode differing from the normal mode;
                     - with a touch call of a popup window with an image of said coded information block including a list of codes of the object modes of operation with color indication of the code of the current operation mode differing from the normal mode;
                     - with a possibility of visual indication of the boundaries of said land areas in color with brightness and character of the indication corresponding to the state of the boundaries with a possibility of touch activation of said indication in case of the normal state of the boundary or with automatic activation of the indication in case of unauthorized crossing the territory by a mobile object;
                     - images of the mobile objects associated with digital communication channels through the interface of said screen and sending data of real mobile objects, including aircraft and ground vehicles at the aerodrome and in the adjacent areas, said images of the mobile objects including images of real mobile objects including:
                        - a brief log-book of the mobile object with a possibility of a touch call of the brief log-book image on the screen in the pop-up window;
                        - an expanded log-book of a mobile object with a possibility of a touch call of an image of said log-book on the screen in a pop-up window;
                        - an image of the symbol of the current operation mode indicator of the mobile object with a color indication symbol image with brightness and character of the images corresponding to the current operation mode of the mobile object, and made:
                           - with a touch call of the image of said indicator on the screen with simultaneous activation of said symbol on the display screen in case of operation of the mobile object in a normal mode;
                           - with an automatic visualization of the image of said symbol of said indicator on the screen with simultaneous activation of said symbol if the mobile object is operating in a mode other than the normal mode;
                           - with a touch call of the image of said coded information block displayed in a popup window, with automatic color indication of the code corresponding to the current operation mode of the mobile object;
                           - with automatic visualization of the symbol image of said indicator on the screen with simultaneous activation of said symbol in case of receiving through said digital communication channel a request of the real mobile object for granting to it the aerodrome supervisory control;
                           - with a possibility of beginning of the aerodrome supervisory control of the mobile object at a touch of the symbol of said indicator shown on the screen in the mode of said request for the aerodrome supervisory control;
                        - an image of a virtual link line between the images of the indicator symbols in the current operation mode of the mobile objects operating in a mode of detected or predicted conflict associated with nonobservance of the prescribed safety distance between the mobile objects on the route, with automatic visualization and indication of said communication line during this conflict;
                        - an image of the aerodrome supervisory control of the mobile object with automatic visualization and color indication of said indicator symbol within time of submission of the aerodrome supervisory control and with automatic coupling to it of a pop-up window with the image of the expanded log-book of the mobile object escort;
                        - visualization of the mobile object symbol at a touch transfer of the image of said mobile object in the predicted dynamic simulation position of the mobile object mode by prescribed route and/or at a change of its movement parameters with a touch termination of said mode and visualization of the image of said symbol;
                        - images objects and turbulence zones, including objects and zones of natural and technogenic origin, displayed on the screen automatically with an acceptable level of transparency at their presence at the aerodrome, with a color indication of their areas that are potentially dangerous for the movement of mobile objects, the brightness and character of the indication corresponding to the level of their danger, and with automatic indication of the boundaries of these dangerous areas in the event of predicted ingress therein of the mobile object buffer zone, with linking to said images of automatically pop-up windows with an image of said brief log-books of meteorological objects and turbulence zones, respectively;
                           wherein:
                           - said images are changed in accordance with the change in the position of the sighting point in space by changing the shooting angle and the observation angle of said virtual model as a whole or its part as a result of the corresponding touch impact said screen;
                           - providing a change in the automatic mode of the character and color of said indication of images of these objects and their elements and symbols of said indicators when changing the operation mode of these objects;
                           - monitoring of the real situation at the aerodrome is carried out on the basis of observation of images of said virtual model or its part on said multi-touch screen in the dynamic mode said images and said information, wherein:
                           - using touch actions on a definite area of the screen there are selected sighting points, shooting angle, observation angle and a map scale of said virtual model or its part on said screen, which are acceptable for identification and monitoring of the displayed current situation in the scope of view selected by the controller;
                           - monitoring the compliance by the mobile objects of the prescribed parameters and traffic routes and the state of the mobile objects at the aerodrome by the presence, color and character of display of the images of symbols of said indicators and said elements of the images of the objects displayed on the screen in automatic mode, and according to said log-books and information blocks displayed on the screen in automatic mode or touch action on a certain area of the screen;
                           - detecting violation of a prescribed safe distance between the mobile objects as they move at the aerodrome by the presence on the screen of an image link line shown in the automatic mode;
                        - the control of the movement of the mobile objects on the aerodrome is carried out in a step by step mode with formation and transmission to the module objects of control commands suitable for execution of technological processes when serving a definite mobile object in the real situation at the aerodrome, formed on the basis of observation on the screen of predicted changes in the actual situation at the aerodrome due to the predicted execution of the control signals by the mobile object wherein the effectiveness of execution of the control commands to eliminate unacceptable deviations and disturbances in the modes other than the normal mode, is estimated at least by a stop of the automatic indication and imaging in the imaging operation mode disappearance of indicators images of the mobile objects on the screen.

According to the invention it is expedient that the received data on the objects forming real situation at the aerodrome, include:
- data on the space configuration and on the terrain relief at the aerodrome areas;
- data on the spatial dimensions and location of surface structures that may be potential generators of turbulence zones, dangerous for the movement of aircraft and ground vehicles, and/or may interfere with the aerodrome monitoring;
- data on the coordinates of real parking areas, aprons, maneuvering areas, taxiways and runways at the aerodrome and its boundaries;
- data on the type, location and parameters of the meteorological objects and turbulence zones in the aerodrome space and areas that are dangerous for take-off and landing operations of the aircraft and for movement of aircraft and ground vehicles at the aerodrome and in the adjacent areas;
- data on the type and location of each mobile object that is at the aerodrome and arriving thereto;
- data on the type and location of the aircraft and ground vehicles which are suitable for communication with them through the associated digital communication channels and screen interface;
- data on the type and location of aircraft and ground vehicles having deviations in their control system, impeding the operation of the associated digital communication channels.

Furthermore, according to the invention it is advisable that the conditions characterizing the operation of each of said mobile object include:
- violation a sequence and scheduled takeoffs/landings by a mobile object;
- violation by a mobile object of the start of the aerodrome supervisory control to be given to said object;
- violation of the standards of movement by a mobile object;
- nonobservance by a mobile object of a prescribed route;
- nonobservance by a mobile object of a prescribed distance between mobile objects on the route;
- nonobservance by a mobile object of a prescribed duration of its stay on the ground territory;
- nonobservance by a mobile object of a prescribed area of its movement at the aerodrome;
- predicted trespass buffer safety zones by mobile objects;
- violation of the operational status of ground stationary objects and violation of the boundaries.

Furthermore, according to the invention it is expedient that the criteria for evaluated safety of the mobile aircraft and ground vehicles at the aerodrome include:
- criteria for evaluating the current operation mode of said aerodrome areas according to their location and condition, including:
   - normal operation mode without restrictions of movement at the aerodrome;
   - predictable alarm or an alarm mode while limiting a possibility of movement at the aerodrome;
   - an emergency mode when banning the movement at the aerodrome;
   - detection of conflict at movement of the mobile objects;
- criteria for evaluating the current operation mode of radio, lighting and auxiliary equipment according to their technical condition, including the normal mode, while providing traffic safety for mobile objects in the location of said equipment, and emergency mode in other cases;
- criteria for evaluating the current operation mode of real mobile objects in accordance with their status, parameters of their movement and the state of the buffer safety zones prescribed to them, including:
   - normal mode when a mobile object carries out prescribed movement parameters along a prescribed route without violating the boundaries of its buffer zone;
   - predicted alarm mode when a mobile object cannot comply with the movement parameters at predicted time along the prescribed route and/or predicted trespass of its buffer zone;
   - an alarm mode due to nonobservance by the mobile object of prescribed movement parameters of a prescribed route, and/or a prescribed sequence of movements and/or in violation of the limits of its buffer zone;
   - an emergency mode when the mobile object cannot move;
   - a mode of detected conflict when a mobile object can not comply with the prescribed movement parameters without disturbing the state of another mobile object or conditions of safe movement at the aerodrome;
- criteria for evaluating the state and movement parameters of meteorological objects and turbulence zones for safety movement of mobile objects of a definite type in the location of the dangerous areas of meteorological objects and turbulence zones.

According to the invention it is expedient to provide continuous visualization of images of said virtual model or its part including the images of the mobile and stationary objects obtained due to a smooth change of the position of said sighting point in the area, a smooth change of the shooting angle, observation angle and map scale at a corresponding action on the touch screen.

Furthermore, according to the invention, it may be possible to allow fragmented visualization of the images of said virtual model or its part including images of the mobile and stationary objects resulting from a discrete change in the position of said sighting point in space, a discrete change of the shooting angle, a observation angle and a map scale at a corresponding touch effect on a certain area of the screen.

According to the invention it is expedient to provide automatic change of color, brightness and character of the image of said objects and/or their components and display of said symbols and their indicators in accordance with the change of the operation mode of the objects.

According to the invention it is expedient that the symbols of indicators of the current operation mode of the mobile objects located at the aerodrome and in the adjacent areas are made in the form of translucent hemispherical surrounding the images of said object on the screen, and with color indication of said hemispheres at the following brightness and character of indication:
- intermittent indication of a yellow color of average brightness for a mobile object in a stationary state waiting start of its aerodrome supervisory control after sending a respective request to the controller;
- intermittent indication of a red color of high brightness for a mobile object in an operation mode other than the normal mode;
- continuous indication of a blue color of average brightness for a mobile object in a stop position by the controller command.

Furthermore, according to the invention it is expedient that the symbols of indicators of the current operation mode of aircraft at their location in the aerodrome airspace and in the adjacent areas are made in the form of translucent sphere surrounding the images of the aircraft on the screen, and providing color indication of said spheres at the following brightness and character of the indication:
- intermittent red-color indication of high brightness for a mobile object in an operation mode other than the normal mode;
- continuous blue-color indication of average brightness for an aircraft in the flight condition in the airspace of the aerodrome and surrounding areas with at a second request for permission to land after the controller had cancelled the permission to land by the originally prescribed route.

Furthermore, according to the invention, it is possible that the image of the indicator for the aerodrome supervisory control of the mobile object is made in the form of a transparent rectangular frame with corners enveloping the image of the mobile object on the screen, and a continuous indication of said corners is provided in a red color of average brightness at the aerodrome supervisory control.

Furthermore, according to the invention it is expedient that the indication of the image of said link line is provided in the form of continuous red-color indication.

Furthermore, according to the invention it is expedient that the intermittent red color indication on the screen is accompanied with sound signals at the controller workplace.

Furthermore, according to the invention it is expedient that for identifying the real situation the controller acts on a definite area of said touch to provide the following:
- sighting of said virtual model or at least a scope of view selected by the controller from a desired point in space in the desired direction and scale;
- checking the condition and current modes of operation of the real aerodrome areas and their boundaries;
- checking the location of the prescribed route of the mobile object at the aerodrome;
- checking the condition and operation of the radio, lighting equipment and accessories;
- visualization of the image of said information block on the wind direction and velocity, and wind direction graphic indicator at the lineup takeoff position;
- visualization of the log-book data of the mobile object requesting aerodrome supervisory control;
- visualization of color and character of the symbol of indication of the current operation mode of the mobile object;
- providing the real mobile object with aerodrome supervisory control;
- stopping the movement of real mobile object on the territory;
- cancelling permission on landing the aircraft;
- visualization of the image of the symbol of the mobile object at a touch transfer of said mobile object to the dynamic simulation mode of predicted position of the mobile object moving along the prescribed or changed route and/or when changing its movement parameters with touch termination of said simulation mode and visualization of the image of said symbol.

According to the invention, it is advisable to control the mobile objects, parameters prescribed routes and states at the mobile objects at the aerodrome including:
- checking compliance of the types of the mobile objects staying at the aerodrome or arriving to the aerodrome by images displayed on the screen and by the content of their brief and expanded log-books in pop-up windows;
- monitoring the current and predicted state of the mobile object at the aerodrome by the presence, color and character of the current and predicted indications of the symbols of their current operation mode indicator on the screen and according to their brief and expanded log-books in the pop-up windows;
- monitoring the movement of the mobile objects at the aerodrome by the presence on the screen of images of non-passed checkpoints in the linear images of unfulfilled routes prescribed or authorized by the controller;
- monitoring the current state of the stationary objects by the presence, color and character of indication of their images and visualizing their boundaries on the screen according to their brief log-books in the pop-up windows;
- monitoring safety of movement of the mobile objects at the aerodrome on the basis of the analysis of causes of the automatic indication of images of symbols of the current operation mode indicator of the mobile and stationary objects taking into account the operation mode code automatically actuated in said coded information block of said object using the touch screen to display the coded information block on the screen.

According to the invention, it is expedient to send digital control commands to a mobile object to stop its current movement along the route and to permit the movement authorized by the controller touching the image of the respective mobile object on the screen.

Furthermore, according to the invention, it is possible to use communication channels for sending to a mobile object control commands changing the movement parameters of the mobile object and/or sending data while making appropriate changes in the respective mobile object expanded log-book on the screen.

According to the invention, it is also expedient that the control commands are selected from the group including at least the following commands:
- cancelling permission to the aircraft of landing by a prescribed route with re-approaching by the prescribed route;
- stopping movement of the mobile object when it is on the ground;
- changing the movement parameters of the mobile object;
- re-routing the mobile object;
- permitting the mobile objects to move along the route authorized by the controller.

According to the invention, it is expedient to provide the following in real time:
- setting a list of control commands suitable for sending them in a digital form to definite mobile object to eliminate deviations and violation of the movement parameters at the aerodrome supervisory control;
- visualization of said list of control commands on a touch screen by touch actions of the controller on the image of the symbol of the mobile object indicator at the aerodrome supervisory control;
- a possibility of touch selection of a control command from said list;
- transmission of the selected control command in a digital form to a real mobile object through digital communication channels and transfer the data associated with the image of the mobile object through the interface of said screen.

The task was also succeeded by developing devices for traffic control at the aerodrome made in the form of hardware-software complex including at least the following:
- an input-output server comprising:
- a data receiving and transmitting device comprising a system of communication channels with a traffic control and a surveillance real-time system providing:
   - receiving current information from the traffic control and surveillance system, said information including:
      - data on the type of aircraft at the aerodrome and expected for arrival, data on the order and schedule of takeoffs/landings and their prescribed traffic routes;
      - data on the type, prescribed routes, time and area of movement of the ground vehicles at the aerodrome;
      - data on the real and forecasted weather conditions at the aerodrome and in the adjacent areas;
      - data on the operability of radio, lighting and auxiliary equipment at the aerodrome;
      - transmitting control commands to the mobile objects whose type, parameters and traffic routes do not meet the prescribed data for organization of their movement and for resolving conflicts at the aerodrome taking into account the real meteorological situation at the aerodrome supervisory control of the mobile objects at the aerodrome;
   - an electronic computer comprising a data aggregation unit providing processing and classification of received data and providing:
      - generation of brief and expanded log-books, including data to be checked by the controller and information on the type, parameters, status and routes of the aircraft at the aerodrome;
      - forming schedules and flight plans of aircraft at the aerodrome;
      - forming data blocks on the real and forecasted weather conditions at the aerodrome and in the adjacent areas;
      - forming data blocks on the operability of radio, lighting and auxiliary equipment;
      - a visualization and control device connected to said electronic computer of the I/O server arranged at the controller's workplace and configured as a monitor with a touch screen,
   wherein, according to the invention, said traffic control device is adapted to perform the above process of traffic control at the aerodrome according to the invention, wherein:
   - the visualization and control device is made as an interactive multi-touch monitor with a screen and a control system that provides a human-machine interface;
   - said data receiving and transmitting device:
   - is adapted to receive in real time data on preset traffic safety criteria at the aerodrome and data on admissible deviations of the movement parameters of the mobile objects from standard values;
   - said device further includes a system of digital communication channels with terrestrial detection means, with a multi-position surveillance system with mobile objects, including aircraft and ground vehicles on the aerodrome and in the adjacent areas providing reception in real-time mode of data on the objects that create real situation at the aerodrome, including at least:
      - data on location of the of the aerodrome structural elements in the geographic coordinate system;
      - data on the operating condition of the stationary ground objects including buildings, aprons, maneuvering area, taxiways and runways;
      - data on the actual current state of mobile objects and their location at the aerodrome;
      - data on the prescribed size and configuration of the safety buffer zone around each mobile object;
      - data on the real routes of movement of the mobile objects at the aerodrome;
      - data on the current condition and coordinates of location of meteorological objects and turbulence zones in the aerodrome space including meteorological objects of natural origin and the turbulence zones of anthropogenic origin;
      - it is further adapted for provision of the mobile objects with digital information associated with their movement at the aerodrome;
      - said data aggregation unit of said electronic computer:
         - is also adapted to perform in a dynamic real-time processing and aggregation of the received data about the objects that creating a real situation at the aerodrome;
         - is further adapted to process standard safety criteria of the mobile objects at the aerodrome, including aircraft and ground vehicles, and to form for each type of the mobile objects involved in the creation of the real situation at the aerodrome, additional information blocks including at least:
            - a database of specified movement parameters of the mobile objects of different types at a definite aerodrome;
            - a database of allowable deviation from the regulatory safety distances when moving objects of different types at a definite aerodrome;
            - a database of standard parameters of the safety buffer zones of the mobile objects of different types at a definite aerodrome;
            - a database of criteria for safety assessment of mobile objects of different types at a definite aerodrome at non-observance by the mobile object of specified movement parameters and/or a admissible safe distance between mobile objects and between mobile and stationary objects at the aerodrome;
            - brief log-books of said stationary ground objects, containing data on their type, location and operating condition;
      - said electronic computer further comprises a unit for evaluation, analysis and visualization of the information provides receiving the data from said data aggregation unit in real-time dynamic mode, said information is on the objects creating real situation at the aerodrome and performing the following operations:
         - defining the boundaries of said stationary ground objects at the aerodrome;
         - forming a buffer safety zone having a prescribed shape and size around said mobile objects;
         - defining boundaries of the safety buffer zones of the mobile objects;
         - forming three-dimensional meteorological objects, turbulence zones and brief log-books containing information on the type, state, coordinates and movement parameters of said objects and meteorological turbulence zones;
         - determining the coordinates of the boundaries of the meteorological objects and turbulence zones dangerous for movement of said mobile objects at the aerodrome;
         - assessment of the predicted danger of movement of mobile objects at the aerodrome at a predicted trespass of the safety buffer zones of the mobile objects as they move along the routes, including predicted intersection of the boundaries of their safety buffer zone with the boundaries of the safety buffer zone with the boundaries of safety buffer zones of other mobile objects and/or of other said stationary ground objects and/or the boundaries of dangerous areas of meteorological objects and turbulence zones;
         - determining the current operation mode of the objects characterizing the real situation at the aerodrome, on the basis of preset criteria for evaluating the predicted danger of movement of mobile objects at the aerodrome taking into account an unexpected situation that can lead to loss of the safety of movement of the mobile objects at the aerodrome, under conditions characterizing the operation mode of each said object selected from the group including:
            - normal mode;
            - predictable alarm mode;
            - alarm mode;
            - emergency mode;
            - detected conflict mode;
            - forming coded information blocks containing a list of codes of operation mode other than normal mode for each of the objects involved in forming real situation at the aerodrome, with a possibility of visualizing said coded information block and automatic indication of the current object operation mode code using the touch screen to monitor the coded information onto said screen;
            - analysis of the predicted and real situation at the aerodrome according to the criteria assessing the risk of the predicted conflict between the mobile objects located at the aerodrome and those arriving and/or departing from it;
            - forming expanded log-books for mobile objects to be allowed to the aerodrome supervisory control, containing parameters of the current operation mode and the state of the mobile object at the aerodrome, and other information related to the movement of the mobile object at the aerodrome to provide its position in accordance with the requirements of technological processes at various steps of its aerodrome supervisory control;
            - forming of a real-time dynamic three-dimensional virtual model of the real situation at the aerodrome, in the aerodrome structure containing structural elements, mobile and stationary objects, said model characterizing the real situation at the aerodrome while providing:
               - linking the checkpoint of beginning of the coordinate numeration of said virtual model to a specific geographic coordinate system point;
               - a possibility of changing the orientation of said virtual model in space by turning said model as a whole or its part about said checkpoint dead reckoning;
               - a possibility of virtual sighting of said virtual model as a whole and at least a part thereof corresponding to the scope of view selected by the controller with various project view and a different observation angle from viewing points located at different points in space;
               - visualization in the dynamic mode on a screen of an interactive multi-touch monitor of said virtual model or its part with images of the objects involved in forming real situation at the aerodrome resulting from said viewing of said virtual model, with linking the coordinates of said objects to the coordinate system of said virtual model, including:
                  - images of stationary ground objects including objects that may be potential generators of turbulence zones, dangerous for takeoff, landing and maneuvering of aircraft, and/or be obstacles to monitor traffic at the aerodrome, made with linking to said images of stationary ground objects of said brief log-books with a possibility of touch call to the screen;
                  - images of real parking areas, aprons, maneuvering areas, taxiways and runways of aerodromes, including their boundaries, with a possibility of indication of their elements on the screen, said images being made:
                     - with linking to the images of said land areas and linear images of the routes of air and surface movement of mobile objects authorized by the controller with their automatic visualization simultaneously with the beginning of movement of the object along the route, with built-in digital images of traffic checkpoints of the of said mobile object along the route in accordance with a predetermined algorithm of technological service in a step-by-step mode with automatic withdrawal from the screen of the passed checkpoints and passed areas of the linear image of the route;
                     - with linking to the image of the territory of said runway prior of the holding position line and the lineup takeoff position of the aircraft with a touch call of the pop-up window with the image of said information block about wind direction and velocity and touch call of the wind direction graphical indicator;
                     - with a possibility of indication of said images of the territories in color with brightness and character of the indication corresponding to the current operation mode of said territory with a possibility of touch call of said indication in case of operation of the territory in the normal mode or with automatic activation of the indication in case of operation of the territory in a mode other than the normal mode;
                     - with a possibility of a touch call of a popup window with an image of said coded information block containing a list of codes of operating conditions of the object with a color indication of the current operation mode other than the normal mode;
                     - with a possibility of visualization of the indication of the image of the boundaries of said territories in color with brightness and character of indication corresponding to the state of the boundaries with a possibility of touch activation of said indication in case of the normal state of the boundaries or with automatic activation of the indication in case of unauthorized boundary crossing territory by a mobile object;
                  - images of mobile objects, including aircraft and ground vehicles present at the aerodrome or arriving at the aerodrome associated through said screen interface with digital communication and data transmission of real mobile objects, said display of the mobile objects including an image of real mobile objects and are made:
                     - with linking to them:
                     - a brief log-book of a mobile object with a possibility of a touch call of the brief log-book image in a pop-up window on the screen;
                     - an expanded log-book of a mobile object with a possibility of a touch call of the expanded log-book image in a pop-up window on the screen;
                     - an image of the symbol of the current operation mode indicator of the mobile object with color indication of the symbol with brightness and character of indication corresponding to the current operation mode of the mobile object, and made:
                        - with a possibility of touch call of its image to the screen with simultaneous indication of said symbol when the object operates in the normal mode;
                        - with automatic visualization of its image on the screen with simultaneous indication of said symbol on the screen in case of operation of the mobile object in a mode other than the normal mode;
                        - with a possibility touch call of the image of said coded information block displayed in a popup window with automatic color indication of the code corresponding to the current operation mode;
                        - with automatic visualization of the image of the symbol of said indicator on the screen with simultaneous indication of said symbol in case of receipt through said digital communication channel a request of the real mobile object on the beginning of its aerodrome supervisory control;
                        - with a possibility of starting the aerodrome supervisory control of the mobile object by touching the image of said symbol of said indicator displayed on the screen in the mode of request for said service;
                  - images of the virtual link line between the images of the symbols of the indicators of the current operation mode of the mobile objects operating in the detected mode or in the mode of predicted conflict associated with non-observance of the prescribed safety distance between the mobile object on the route with automatic visualization and indication of said image of the link line during said conflict;
                  - image of the symbol of the indicator of the aerodrome supervisory control of the mobile object with automatic visualization and color indication of said indicator at the aerodrome supervisory control time and with automatic reference to the pop-up window with the mobile object expanded log-book image;
                  - symbol of the mobile object image at touch transfer of said mobile object in the dynamic simulation mode at a predicted position of the mobile object moving along a prescribed or changed route and/or its changed movement parameters and a touch the termination of said mode and visualization of the image of said symbol;
                  - images of metrological objects and turbulence zones including objects and zones of natural and technogenic origin, visualized on the screen automatically with an acceptable level of transparency at their presence at the aerodrome, with a color indication of their areas that are potentially dangerous for the movement of mobile objects with brightness and character of the indication corresponding to their level of danger, and automatic indication of the boundaries of said dangerous areas in the event of predicted penetration
                     buffer zone of the mobile object with linking to the images of the automatic pop-up windows with an image of said brief log-books of the meteorological object and the turbulence zones, respectively;
                  wherein said traffic control device is adapted for presentation on a screen of a multi-touch display in the real-time dynamic mode:
      - said images of said objects of said virtual model or a part thereof resulted from said sighting and in accordance with the conditions of their visualization on the screen, with automatic change of said images in accordance with the position of said sighting point in space, a change the shooting angle and shooting angle of said virtual model as a whole or its part as a result of respective touch on said screen;
      - images of said symbols of the indicators, route lines, checkpoints, link lines, said log-books and information blocks in accordance with the conditions of their display on the screen in an automatic mode and at a touch call on the screen;
      - indication of said images of the objects and their elements and said images of the symbols of their indicators in automatic mode in accordance with said conditions of their indication while maintaining indication color and character during the operation of the object in a respective mode with a change in the color and character of indication after transferring the object to another mode;
      - images of predicted changes in the real situation at the aerodrome due to the predicted execution by the mobile object of control commands of the controller in the real situation at the aerodrome.

According to the invention, it is expedient that said received additional data on the objects forming the real situation at the aerodrome include at least the following:
- data on the space configuration of the terrain relief at the aerodrome, spatial dimensions and location of the ground objects, which may be potential generators of turbulence zones, dangerous for the movement of aircraft and ground vehicles, and/or interfere the observation of the movement at the aerodrome;
- data on the coordinates of the real parking areas, aprons, maneuvering areas, taxiways and runways at the aerodrome and its boundaries;
- data on the type, location and state parameters of meteorological objects and turbulence zones in the aerodrome space and areas that are dangerous for take-off and landing procedures of aircraft and for movement of aircraft and ground vehicles at the aerodrome and in the adjacent areas;
- data on the type and location of each mobile object staying at the aerodrome and arriving to it;
- data on the type and location of aircraft and land that can be controlled through associated digital communication channels and data transmission and are suitable for data transfer;
- data on the type and location of aircraft and ground vehicles having in their control system deviations impeding their control through the associated digital communication channels and data transfer.

In so doing, according to the invention, it is advisable that the criteria characterizing the operation mode of each mobile object, includes at least:
- violation by a mobile object of the sequence and schedule of takeoffs/landings;
- violation by a mobile object of the time of submission of aerodrome supervisory control;
- non-observance of the movement standards by a mobile object;
- non-observance of the prescribed route by a mobile object;
- non-observance of the prescribed distance between the mobile objects on the route;
- non-observance of the prescribed duration of staying of a mobile object on the ground and/or non-observance of a prescribed area of its location or movement at the aerodrome;
- predicted trespass of the safety buffer zones of mobile objects;
- violation of the operational status of stationary ground vehicles and the violation of their boundaries.

According to the invention, it is expedient that the unit for evaluation, analysis and visualization of information adapted for evaluation of the safe movement of mobile aircraft and ground vehicles at the aerodrome includes:
- criteria for evaluating the current mode of operation of said aerodrome areas according to their location and condition including:
   - normal operation mode without restrictions for movement of objects at the aerodrome;
   - predictable alarm mode or alarm mode for the territory with limited movement thereon;
   - emergency mode when at banning movement on it or at detection of conflict situation at the aerodrome in connection of said banning;
   - criteria for evaluating the current operation mode of the radio, lighting and auxiliary equipment according to their technical condition including the normal mode while providing safety of movement of the mobile objects in the area of location of said equipment, and the emergency mode;
   - criteria for evaluating the current operation mode of real mobile objects in accordance with their state, parameters of their movement and the state of the safety buffer zones prescribed to them including:
      - a normal mode when the mobile object implements the prescribed movement parameters along the prescribed route without violating the boundaries of its buffer zone;
      - predicted alarm mode at a forecasted time the mobile object cannot perform the movement parameters along the prescribed route and/or at predicted trespass of its buffer zone;
      - an alarm mode when a mobile object violates the prescribed movement parameters along a prescribed route and/or a prescribed sequence of movements and/or violates the limits of its buffer zone;
      - emergency mode in case of impossibility of movement of a mobile object;
      - a detected conflict mode detection when a mobile object can not comply with the prescribed movement parameters without violation of the state of another mobile object or conditions of safe movement at the aerodrome;
      - criteria for evaluating the status and movement parameters of meteorological objects and turbulence zones for safety movement of mobile objects of a definite type in the location of the hazardous areas of said meteorological objects and turbulence zones.

According to the invention, it is expedient that the traffic control device is capable of continuous visualization of the images of said virtual model or its parts including images of mobile and stationary objects resulting from a smooth change of the position of said sighting point in space, a smooth change of the shooting angle, observation angle and display scale at a respective action on the touch screen.

Furthermore, according to the invention, it is expedient that the traffic control device is made with a possibility of fragmented visualization of the images said virtual model or any part thereof including the images of the mobile and stationary objects resulting from a discrete change in the position of said sighting point in space, a discrete change of the shooting angle, observation angle and image scale at a respective action on the touch screen.

According to the invention, it is expedient that the traffic control device is capable of visual indication of images of indicators of the current operation mode of mobile and stationary objects on the ground disposed in the form of translucent hemisphere surrounding the images of said objects and in correspondence with the state and movement of the mobile object, there is provided color indication of said hemispheres at the following brightness and character of the indication:
- intermittent yellow color indication of average brightness for a mobile object in a fixed wait state of starting its aerodrome supervisory control after sending a relevant request to the controller;
- intermittent red color high-brightness indication for a mobile object in an operation mode other than the normal mode;
- continuous blue color average-brightness indication of the mobile object stopped by a controller command.

According to the invention, it is expedient that the traffic control device provides visualization of the images of the indicators of the current operation mode of the aircraft in the aerodrome airspace and in the adjacent areas in the form of translucent sphere surrounding the images of the aircraft, and in accordance with the state and movement of the aircraft the color indication of said spheres is provided at the following brightness and character of the indication:
- intermittent red color high-brightness indication for a mobile object in an operation mode other than the normal mode;
- continuous blue color average-brightness indication for an aircraft in the flight condition in the aerodrome airspace and in the surrounding areas at a missed approach after the controller has cancelled the landing clearance by the originally prescribed route.

Thus, according to the invention, it is expedient that in the traffic control device the visualization of the image of the indicator of the aerodrome supervisory control of a mobile object is made as a transparent rectangular frame with visualized angles covering the image of said mobile object, with continuous indication of said angles in red color of the average brightness during said aerodrome supervisory control.

According to the invention, in the traffic control device said indication of the link line in its imaging is performed in a continuous red color indication mode.

According to the invention, it is possible that the intermittent red color indication on the screen is accompanied with sound signals at the controller workplace.

Furthermore, according to the invention, it is expedient that the traffic control device has been adapted for visualizing the results of the touch actions of the controller at a specific area of said screen provides at least:
- sighting said virtual model or at least a scope of view selected by the controller, from the desired point in space in desired direction and scale;
- checking the condition and current operation mode of the real aerodrome areas and their boundaries;
- checking the location of the prescribed route of the mobile object at the aerodrome;
- checking the condition and operation of the radio, lighting and auxiliary equipment;
- visualization of the image of said information block on the wind direction and velocity, and graphic wind indicator near the lineup take-off position;
- visualization of the expanded log-book of the mobile object requesting aerodrome supervisory control;
- visualization of color and character indicate of the indication of the symbol of the current operation mode indicator of the mobile object;
- beginning of rendering the aerodrome supervisory control to a real mobile object;
- stopping the movement of the real mobile object on the territory;
- cancelling the rending clearance for an aircraft;
- visualization of the mobile object symbol at a touch transfer of said mobile object in the predicted dynamic simulation position of the mobile object moving along a prescribed or changed route and/or at a change of its movement parameters with a touch termination of said mode and visualization of the image of said symbol.

In so doing, according to the invention, it is possible to transmit to the mobile object control commands for changing the movement parameters and/or for changing the route of the mobile object through communication and data transfer channels with a simultaneous change in the image of the extended log-book of a respective mobile object on the screen.

According to the invention it is expedient to provide a passivity of transferring to the mobile object of control commands to stop the movements on the route authorized by the controller in digital form by touching the image of the respective mobile object on the screen.

Furthermore, according to the invention, in the traffic control device:
- the unit for evaluation, analysis and visualization of information provides forming a list of control commands suitable for removal of unacceptable deviations and violations of movement parameters of a specific mobile object at its supervisory control with a possibility of visualizing said list on the screen using the touch input by the controller to display an indicator of the corresponding mobile object at the aerodrome supervisory control with touch selection by controller of the respective control command in said list;
- the I/O data transmission server provides transmission of a selected control command via digital data transfer channels to the mobile object with its display on the screen.

According to the invention, it is expedient that said digital control command list includes at least the following commands:
- cancel of the landing clearance for an aircraft on a prescribed route with a command for a second approach along the route authorized by the controller;
- stopping the movement of the mobile object when it is on the ground;
- changing the movement parameters of the mobile object;
- re-routing the mobile object;
- permission to the mobile objects to perform movement along the route authorized by the controller.

### BRIEF DESCRIPTION OF DRAWINGS

The method and device according to the invention for traffic control at an aerodrome are clarified by a description of their embodiment with reference to appended drawings, in which:
Fig. 1 illustrates a schematic diagram of the device according to the invention for traffic control at an aerodrome using the method according to the invention;
Fig. 2 illustrates a scheme of sighting a three-dimensional virtual model in a real situation at the aerodrome in the method according to the invention;
Fig. 3 illustrates an example of display of a three-dimensional virtual model at the real situation at the aerodrome, visualized on a multi-touch screen to control movement at the aerodrome according to the invention by the method according to the invention;
Figs. 3a, 3b illustrate visualization examples of display of an aircraft with an image of a symbol of its operation mode indicator: 3a - at the ground position of the aircraft, 3b - in the air;
Fig. 3c illustrates an example of visualization on the display screen of the aircraft with an image of the indicator supervisory control of the mobile object;
Figs 4-9 show examples of visualization fragments on a display screen illustrating a three-dimensional virtual model in a real situation at the aerodrome.

The examples of the device and the method according to the invention are not exhaustive and do not limit the invention which is within the scope of the claims.

### BEST EMBODIMENT OF THE INVENTION

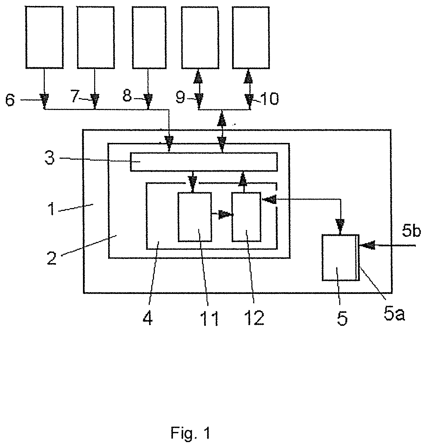

The traffic control method for an aerodrome according to the invention may be implemented using a device 1 for traffic control at the aerodrome according to the invention made in the form of a hardware-software complex whose schematic diagram is shown in Fig. 1.

According to the invention, the device 1 (Fig. 1) comprises an input/output server 2 including a transceiver 3 used for receiving and transmitting information, an electronic computer 4 and an imaging device 5.

According to the invention, the input-output device is adapted to operate in the real-time mode and communicates with external sources of information via respective channels 6-10, for example:
- with communication channels 6 having systems of surveillance and traffic control including surveillance means (radars) located at the aerodrome and in the surrounding area, traffic control aerodromes, flight information sources, an independent monitoring system;
- with communication channels 7 connected to ground-based detection means including detection and indication of the location of mobile objects including thermal (infrared) and optical means detecting location of objects;
- with communication channels 8 connected with a multi- position surveillance system with the sources of meteorological information, autonomous weather stations, weather radars and lidars;
- with two-way radio channels 9, and a channel having 10 two-way lines for transmission of digital data between the device 1 and the aircraft and ground vehicles to be monitored at the aerodrome and in the adjacent areas controlled by the aerodrome controller.

In so doing the transceiver device 3 is also adapted for transmission control commands through channels 9 and 10 in real-time to the mobile object whose type, parameters and traffic routes do not meet the prescribed data on the organization of their movement and conflict resolution at the aerodrome and digital information related to the maintenance of their movement at the aerodrome.

According to the invention, the computer 4 is made as a processor comprising a block 11 for aggregating the received data and coupled with said transceiver 3, and a block 12 for evaluation, analysis and visualization of information taken from the data aggregating block 11 connected to the visualization and control device 5 and to said transceiver 3.

According to the invention, the visualization and control device 5 is made in the form of interactive multi-touch monitor with a screen 5a and a control system providing operation of a human-machine interface to create an operative connection with the assessment, analysis and visualization of information block 12 to obtain necessary information and an image by means of touch effect 5a on the screen 5b and for forming information blocks intended for their subsequent transmission to the mobile objects, for example, digital messages through the two-way data transmission channels 10 of associated with the mobile objects and interface of said screen 5.

The inventors used an LCD screen with a diagonal of 56 inches as a multi-touch monitor 5a.

This method for controlling traffic at an aerodrome according to the invention does not require arrangement of the device 1 at the controller workplace, but allows remote monitoring of the actual situation at the aerodrome and remote control movement of the mobile objects by means of the device 1 in which the transceiver 3 and blocks 11 and 12 of the server 2 can be remotely removed from the visualization and control device 5 and the from the aerodrome.

In the invention said visualization and control device 5 used in the device 1 was taken away from the transceiver 3 and electronic computer 4 in the absence of direct visibility of the aerodrome by the controller.

In this method for traffic control at the aerodrome at the step of receiving and processing the information received by the transceiver 3 from an external sources of information via the channels 6-10, there must be determined a set of parameters characterizing at each point of time the spatial position of each object forming real situation at the aerodrome and having a prescribed safety buffer zone surrounding the object, getting into that of other objects could lead to a potential threat of collision and violation of their operational status.

For this purpose, the transceiver 3 adapted to receive in real time current information from the surveillance and control system through the channels 6-8, said information including:
- data on the type of aircraft being at the aerodrome or expected for arrival;
- data on the sequence and schedule of takeoffs/landings of aircraft and routes prescribed to them for movements at the aerodrome;
- data on the type of ground vehicles, prescribed routes, time and area of their movement at the aerodrome;
- data on the real and forecasted weather conditions at the aerodrome and in the adjacent areas;
- data on the operating capacity of radio, lighting and auxiliary equipment at the aerodrome.

Furthermore, according to the invention, the transceiver 3 is also adapted to receive in real time via the channels 6-10 the following digital information:
- data on the position of the structural elements of the aerodrome in a geographic coordinate system;
- data on the operational status of stationary ground objects including buildings, aprons, maneuvering area, taxiways and runways;
- data on the real current state of mobile objects and their location at the aerodrome;
- data on the size and configuration of the prescribed safety buffer zone around each of the mobile objects;
- data on real routes of movement of mobile objects at the aerodrome;
- data on the current condition and coordinates of the meteorological objects and turbulence zones in the aerodrome air space including meteorological objects of natural origin and the turbulence zones of an anthropogenic origin;
- data on the specified safety criteria at the aerodrome and the admissible deviation of movement parameters of mobile objects from the standard values.

It should be noted that the "prescribed safety buffer zone" is a standard indicator different for each type of a mobile object characterizing the vulnerability of the design at a different position of the object in space and represents a free space which should surround the outer surface of the object, such as a mobile object, when it moves on the territory and in the airspace of the aerodrome and interacts with other stationary and mobile objects. Trespassing of the prescribed safety buffer zone can lead to a loss of operating capacity of the object, in definite, to the loss of stability and to collisions.

According to the invention, the size and configuration of the prescribed safety buffer zones of mobile objects of various types are used for estimation or forecast of disturbing conflict in the real situation at the aerodrome, but it is not shown on the screen.

It should also be noted that the described criteria as safety standards at the aerodrome may consist of various standards of mutual arrangement of the on the ground and airspace of the aerodrome and in areas adjacent thereto, such as:
- a minimum required span of the distance between the buffer zones of several mobile safety objects as they move on the ground and in flight;
- a minimum required span of the distance between the safety buffer zones of several mobile object and the boundary area of the aerodrome;
- a prescribed value of speed of a moving mobile object, time intervals and other parameters.

According to the invention, the observance of these standards and deviation from them at the movement of mobile objects is granted for monitoring and control by the controller, which respectively requires monitoring the relative position and state of the objects at the aerodrome current time.

In the method according to the invention the data on the objects forming the real situation at the aerodrome, and received by the transceiver 3 through the channels 6-10, should include at least the following:
- data on the spatial configuration of the terrain relief of the aerodrome;
- data on the spatial dimensions and location of the surface structure that may be potential generators of turbulence zones, dangerous for the movement of aircraft and vehicles, and/or interfere with the observation of the movement at the aerodrome;
- data on the coordinates of the real parking areas, maneuvering areas, taxiways and runways at the aerodrome and its boundaries;
- data on the type, location and parameters of state of the meteorological objects and turbulence zones in the aerodrome space and areas that are dangerous for take-off and landing procedures and for movement of aircraft and ground vehicles at the aerodrome and in the adjoining space;
- data on the type and location of each of the mobile objects that are at the aerodrome or arriving thereto;
- data on the type and location of aircraft and land vehicles which are suitable for communication with them through the channels 10 associated with them;
- data on the type and location of aircraft and ground vehicles having deviation in their control system impeding their control through the associated communication channels 9 and digital channels 10 and data transfer.

The received data aggregating block 11 is adapted for processing said data to form at least:
- brief and expanded log-books accompanying each aircraft and containing data to be checked by the controller, and information on the type, parameters, status and prescribed movement routes of the aircraft at the aerodrome;
- schedules and traffic plans for the aircraft at the aerodrome;
- data blocks on the real and forecasted weather conditions at the aerodrome and in the adjacent areas;
- data blocks on the operation of the radio, l lighting and auxiliary equipment.

Furthermore, according to the invention, the data aggregating block 11 is further adapted to perform in dynamic real time mode processing of the received data relating to the condition and movement of the objects forming the real situation at the aerodrome, and processing standard safety criteria of movement of aircraft and ground vehicles at the aerodrome to form for each type of mobile objects additional information blocks including at least databases, allowing evaluation of the deviations of the movement parameters of the mobile objects from the standard parameters including:
- database of standard movement parameters of mobile objects of different types at a definite aerodrome;
- database of admissible deviation from the standard safety distances during movement of mobile objects of different types at a definite aerodrome;
- database of standard parameters of safety buffer zones of mobile objects of different types at a definite aerodrome;
- database of standard criteria for evaluating the safety of mobile objects of different types at a definite aerodrome at non-observance by a mobile object of standard parameters of movement and/or admissible safe distances between mobile objects and between mobile and stationary objects at the aerodrome.

Furthermore, the data aggregating block 11 is further used for forming brief log-books of said stationary ground objects containing data on their type, location and operational status.

According to the invention, the block 12 for evaluation, analysis and visualization of information, when running in the real-time dynamic mode, is capable of ranging the data obtained from said block 11 and performing the following operations:
- determining the coordinates of the boundaries of the stationary ground objects at the aerodrome;
- forming around said mobile objects a safety buffer zone, having a prescribed shape and size;
- determining the boundaries of the safety buffer zones of the mobile objects;
- forming areas of meteorological objects and turbulence zones and information blocks on the type, coordinates and movement parameters of said meteorological objects and turbulence zones;
- determining the coordinates of the boundaries of meteorological objects and turbulence zones dangerous for movement of said mobile objects of a definite type at a specific aerodrome.

Furthermore, according to the invention the block 12 for evaluation, analysis and visualization of information is adapted for performing the real-time dynamic mode an analysis of the real situation at the aerodrome by a set of parameters of a predicted interaction of mobile objects between themselves and mobile objects with stationary objects at the aerodrome based on the data received from said data aggregating block 11 and the data resulted from the above operations in the block 12, and for evaluation of the predicted danger of movement of the real mobile objects at the aerodrome including the predicted trespass of the formed safety buffer zones of the mobile objects at a predicted intersection of the boundaries of the boundaries of the safety buffer zones of other mobile objects and/or the boundaries of said stationary ground objects and/or with the boundaries of hazardous meteorological objects and turbulence zones.

In the device 1 block 12 for evaluation, analysis and visualization of information is adapted to determine the current operation mode of the objects characterizing the real situation at the aerodrome on the basis of preset criteria for evaluating the predicted danger of movement of mobile objects at the aerodrome, taking into account the reasons of arising a situation that can lead to loss of safety level of movement of the mobile objects at the aerodrome under conditions characterizing the operation mode of each said object, selected from the group including:
- normal operation mode;
- predictable alarm mode;
- alarm mode;
- emergency mode;
- conflict detection mode.

In so doing the criteria characterizing the operation mode of each object include:
- violation of the sequence and takeoffs/landings schedule by the mobile object;
- violation of the beginning of rendered supervisory control by the mobile object since;
- non-observance of standards of movement by the mobile object;
- non-observance of the prescribed route by the mobile object;
- non-observance of a prescribed distance between the mobile objects on the route;
- non-observance of a prescribed duration of staying of a mobile object on the aerodrome territory and/or non-observance a prescribed area of its location or movement at the aerodrome;
- predicted trespass of the safety buffer zone of mobile objects;
- violation of the operational status of ground stationary objects and the violation of its boundaries.

The block 12 for evaluation, analysis and visualization of information is also adapted for analysis of the predicted and real situation at the aerodrome according to the criteria assessing the risk of predicted conflict between the real mobile objects located at the aerodrome, arriving and/or departing it, and safety evaluation of movement of the mobile aircraft and ground vehicles based on criteria including at least:
- criteria for evaluating the current operational status of said areas of the aerodrome in accordance with their location and operational status including:
   - normal Operation mode of the territory with no restrictions for movement on it;
   - predictable alarm mode or alarm mode for the territory at limited opportunity of movement thereon;
   - emergency mode at banning the traffic on the territory or in the event of conflict situations at the aerodrome in connection with said banning;
   - criteria for evaluating the current operation mode of the radio, lighting and auxiliary equipment according to their technical condition including the normal mode while providing safe traffic of the mobile objects at the area of location of said equipment and an emergency mode in other cases;
   - criteria for evaluating the current operation mode of the real mobile objects in accordance with their status, their movement parameters and the state of the safety buffer zones prescribed to them including:
   - a normal mode when the mobile object observes prescribed movement parameters along a prescribed route without violating the boundaries of its buffer zone;
   - a predicted alarm mode when a mobile object cannot comply with the movement parameters at predicted time along the prescribed route and/or predicted trespass of its buffer zone;
   - an alarm mode due to nonobservance by the mobile object of prescribed movement parameters along a prescribed route, and/or a prescribed sequence of movements and/or violation of the limits of its buffer zone;
   - an emergency mode when the mobile object cannot move;
   - a mode of detected conflict when a mobile object can not comply with the prescribed movement parameters without disturbing the state of another mobile object or conditions of safe movement at the aerodrome;
   - criteria for evaluating the status and movement of the parameters of meteorological objects, turbulence zones and hazardous areas in terms of safe movement of mobile objects of a particular type in the location of the hazardous areas said meteorological objects and turbulence zones.

Furthermore, the block 12 for evaluation, analysis and visualization of information is used for forming coded information blocks containing codes of the operation mode of each of the objects involved in forming the real situation at a particular aerodrome with indication of the code of the current operation mode of the object when visualizing said coded information block on the screen.

Furthermore, the block 12 for evaluation, analysis and visualization of information according to the invention is used for forming expanded log-books for mobile objects granted with the aerodrome supervisory control containing the parameters of the current operation mode and state of the mobile object at the aerodrome, and other information related to the movement of the mobile object at the aerodrome, to provide its position in accordance with the processes at various steps of its aerodrome supervisory control.

According to the invention block 12 for evaluation, analysis and visualization of information provides forming three-dimensional virtual model of the real situation at the aerodrome in a dynamic real-time mode, providing linking the checkpoint of the beginning of the coordinate numeration of said three-dimensional virtual model to a definite point of a geographic coordinate system and visualizing the images obtained by virtual sighting this model on the screen 5a.

In the traffic control method according to the invention the block 12 for evaluation, analysis and visualization of information allows display on the screen 5a of the interactive multi-touch monitor 5 of images of said three-dimensional virtual model as a whole or its part obtained due to virtual sighting said model or its part with a possibility of changing the position of the sighting point at a desired rate relative to the control point of the beginning of the coordinate numeration of said virtual model, changing the viewing direction and observation angle for obtaining an image in a desired scale for acceptable accuracy of identification of the objects and situational conditions at the aerodrome, which is achieved due to appropriate action on said touch screen 5a.

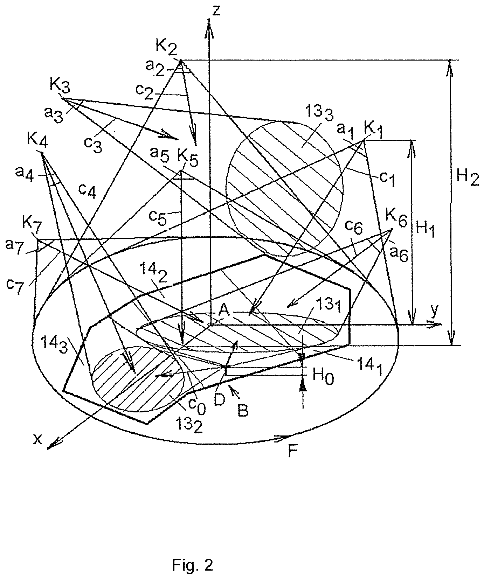

Fig. 2 is a diagram of possible sighting of the three-dimensional virtual model of a real situation at the aerodrome, which has a checkpoint A of the beginning of the coordinate numeration coupled to the geographic coordinate system point selected within the aerodrome boundaries B with a different view and a different observation angle from the points K of virtual sighting arranged in space at different distances.

As shown in Fig. 2, an object of virtual sighting may be a three-dimensional virtual model as a whole and its part, for example, a respective scope of view 13 (e.g. area 13₁ or area 13₂, 13₃ of the overview) selected by the controller in zone 14₁ of its area of responsibility (in zone 14₁ or zone 14₂, 14₃, respectively) at the aerodrome B, while the sighting can be performed from points K of the virtual sighting (K₁ or K₂-7), located at different points in space at different heights (for example, at height H₁, H₂, as shown by the points K₁ and K₂), with different shooting angles (c₁ or c₂-c₇) and a different observation angle (a₁ or a₂-a₇).

The possibility of such sighting of the virtual model allows the controller to choose an approach angle, a observation angle, and image scale of said model or a part thereof with their display on the screen of the device 5 that is most suitable for the identification of objects and situations in the scope of view at the aerodrome. The possibility of varying the position of the sighting points K, observation angle and image scale when visualizing the model on the screen provides the controller with significant advantages on monitoring the situation compared with the observation in the line of sight from the aerodrome tower D (Fig. 2) with the maximum height H0 in the prior art traffic control methods.

Furthermore, according to the invention, it is possible to change the orientation of said virtual models by rotating F of said model as a whole or its part about said checkpoint A of the coordinate numeration of the virtual model that allows one to visualize the corresponding displacement virtual model image on the screen for comprehensive observation of the real situation at the aerodrome.

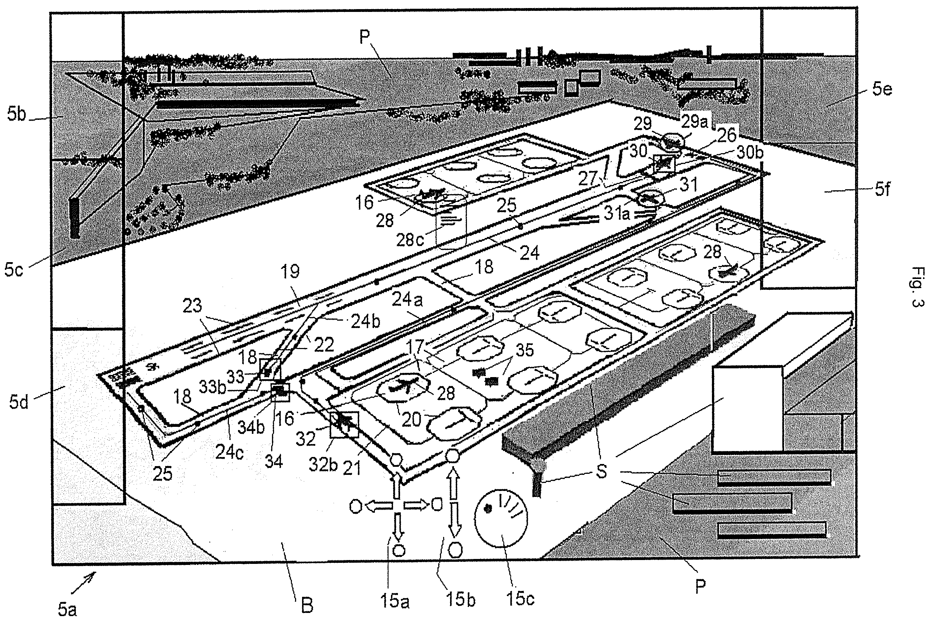

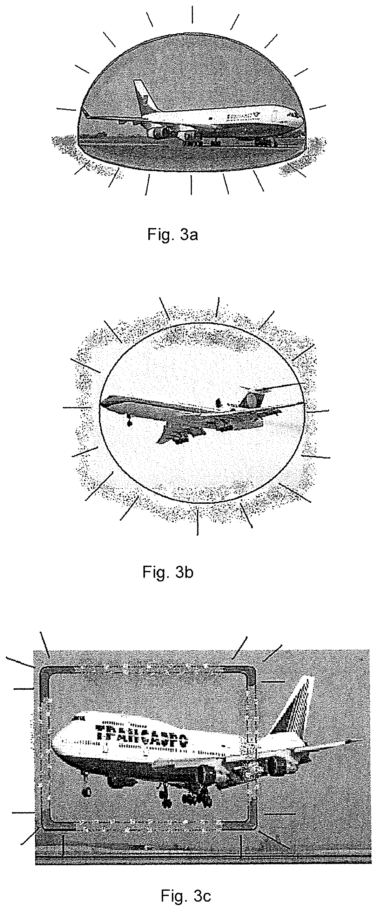

Fig. 3 is a schematic view of an example of display of a part of the three-dimensional virtual model of the real situation at the aerodrome displayed on the screen 5a of the interactive multi-touch monitor of the visualization and control device 5 having touch control devices 15a, 15b, 15c.

According to the invention, the screen 5a provides visualization of images of said virtual model or its part obtained by sighting the model to control the sighting process and, accordingly, the scale of the model image the screen:
- at smooth or discrete touch action on said screen 5a in the area placement of the touch device 15a to control the position of the sighting point K in space (e.g. the arrow as shown in Fig. 3) and the observation angle (e.g. the button as shown in Fig. 3);
- at smooth or discrete touch action on said screen 5a in the area of placing the touch device 15b to control the observation angle with observation;
- at smooth or discrete touch action on said screen 5a in the area of placement of the touch device 15c to control the control the rotation Of the model image about the checkpoint A at a desired rate at the beginning of coordinate numeration (Fig. 2) of said virtual model.

In the method of traffic control according to the invention a display of said virtual model as a whole or its part obtained as a result of said virtual sighting (Fig. 2), also provides visualization of the images of the objects involved in forming the real situation at the aerodrome, with linking the coordinates of said images of the objects object to the coordinate system of said virtual model.

When implementing the method of traffic control at the aerodrome according to the invention using the device 1 according to the invention, the images of the objects involved in forming the real situation at the aerodrome, may include (in case of their presence at the aerodrome) images of stationary objects; images of mobile objects staying at aerodrome and in the adjacent areas, images objects and turbulence zones.

Fig. 3 illustrates an example of visualizing on the screen 5a of an image of a three-dimensional virtual model of the real situation at the aerodrome B resulting from the virtual sighting the area 3₂ when viewing the virtual model from point K₇ at observation angle c₇ and approach angle a₇ (Fig. 2) in the real current situation.

As shown in Fig. 3, the image of the virtual three-dimensional models of the real situation includes the following data, the knowledge of which is necessary to the controller for evaluation the real situation and for selecting on-line control commands:
- an image of the data block 5b on the operation of radio and lighting equipment;
- an image of the schedule 5c and plan 5d aircraft movements at the aerodrome;
- an image of the data block 5e on real weather conditions and data block 5f on the predicted weather conditions at the aerodrome and in the adjacent areas.

From the results of data processing in the block 11, ordering the data received by the transceiver 3 in the current mode, and on the analysis of these data performed in the block 12 the analysis, it follows that at the current time the aerodrome airspace has no aircraft arriving at the aerodrome and leaving the aerodrome and no meteorological objects and turbulence zones having area dangerous for movement of mobile objects in the aerodrome space, that at the visualization of the three-dimensional virtual model of the real situation at the aerodrome on said screen one may characterize the real situation in the scope of view 13₂ overview as a ground situation.

In this case, as shown in Fig. 3, the images of the stationary ground objects include:
- images of stationary ground objects including objects that may be generators of turbulence zones dangerous for takeoff, landing, and maneuvers of aircraft, and/or be an obstacle for monitoring the traffic at the aerodrome, for example, images of buildings S (in the absence of images of generated turbulence zones of a technogenic origin with areas dangerous for traffic at the aerodrome);
- images of the terrain relief at the aerodrome area B and the surrounding areas P in the scope of view selected by controller: for example, the area 13₂;
- images of the real aerodrome areas: parking lots 16 with aprons, maneuvering areas 17, taxiways 18 and runways 19 of the aerodrome with their boundaries 20, 21, 22, 23, respectively.

According to the invention, the images of real areas of the parking lots 16 with aprons, maneuvering areas 17, taxiways 18 and runways 19 perform:
- with linking to the images of said areas of linear images of the ground routes of mobile objects authorized by the controller, such as routes 24, 24a, 24b, 24c shown in Fig. 3 with automatic visualization of the routs concurrently with the start of movement of the mobile subject along a prescribed route with introduced therein digital images of the checkpoints 25 to monitor the movement of the mobile object along the route accordance with a preset algorithm of the supervisory control in the step-by-step mode, with subsequent automatic step-by-step withdrawal of the checkpoints 25 from the screen and passed sections of the respective linear image of the linear image of the route;
- with linking to the image of the runway 19, image of the preliminary takeoff position 26 and the lineup takeoff position 27 with a possibility of a touch call of pop-up window with an image of a formed information block on the wind direction and velocity (not shown) and a possibility of a touch call of the graphic wind direction indicator (not shown);
- with a possibility of imaging said areas 16-19 in color at brightness and character of indication corresponding to the current operation mode of the area with a possibility of touch activation of the indication in the case of operation of the are in the normal mode or the automatic activation in case of operation in a mode other than the normal mode;
- with a possibility of imaging the boundaries 20, 21, 22, 23, 16-19 of said areas in color with brightness and character of the images corresponding to the state of the boundaries with a possibility of a touch activation of the indication in case of normal state of the boundaries or automatic activation of the indication in case of unauthorized predicted crossing the boundaries of the territory of the mobile object.

According to the invention, the images of the mobile objects present at the aerodrome and in the adjacent areas include images of aircraft and ground vehicles staying at the aerodrome, arriving at the aerodrome and leaving it including aircraft and ground vehicles, associated through the interface of said screen and digital channels 9 and 10 with the imaging device 5 and device control 1.

Fig. 3 illustrates images of mobile objects: aircraft 28, 29, 30, 31, 32 and ground vehicles 33, 34, 35.

According to the invention the images of the mobile objects include an image of a real mobile object with linking to:
- image of a symbol of the current operation mode indicator of the mobile object in color, brightness and character corresponding to the current actual state of the mobile object, characterized as a current operation mode;
- a symbol of the indicator of the aerodrome supervisory control of a mobile object with symbol indication;
- an image of a respective the corresponding brief log-book of the mobile object with a possibility of touch call of said log-book onto the screen in a popup window;
- an image of a respective expanded log-book of the mobile object with a possibility of touch call of said log-book onto the screen in a popup window;

According to the invention, the device 1 controlling the movement at the aerodrome provides automatic visualization and indication of coupling line between the images of indicators of the mobile objects operating in mode of a detected or predicted conflict associated with non-observance of a prescribed distance between the safety buffer zones of the mobile objects.

Figs. 3a, 3b show examples of visualization on the screen of an aircraft with an image of a symbol of its current operation mode indicator: Fig. 3a - at the ground position, Fig. 3b - in the air.

According to the invention, the image of the symbol of the current operation mode indicator of mobile objects moving on the ground or in the stationary state can be made of a translucent hemisphere surrounding the mobile object, for example, as shown in Fig. 3a, and when displayed on the screen said hemisphere should have color indication corresponding to the state and movement of the mobile object, at the following brightness and character of the indication:
- intermittent indication of a yellow color of average brightness for a mobile object in a stationary state waiting start of its aerodrome supervisory control after sending a respective request to the controller;
- intermittent indication of a red color of high brightness for a mobile object in an operation mode other than the normal mode;
- continuous indication of a blue color of average brightness for a mobile object in a stop position by the controller command.

Furthermore, according to the invention the image the symbols of the indicators in the current operation mode of the aircraft in the aerodrome airspace and at the adjacent areas may be made in the form of translucent sphere surrounding the aircraft image for example, as shown in Fig. 3b, while on said screen its color indication must be provided in accordance with the state and movement of the aircraft at the following brightness and character of the indication:
- intermittent red-color indication of high brightness for a mobile object in an operation mode other than the normal mode;
- continuous blue color average-brightness indication for an aircraft in the flight condition in the aerodrome airspace and in the surrounding areas at a missed approach after the controller has cancelled the landing clearance by the originally prescribed route.

Fig. 3c illustrates an example of visualization on the screen of an aircraft with an image of the symbol of the indicator the aerodrome supervisory control of the mobile object. According to the invention, the symbol image is made in the form of a transparent rectangular frame with visualized corners enveloping the image of the mobile object while providing continuous indication of said corners in a red color of average brightness with automatic linking to pop-up window containing the image expanded form mobile support object (not shown).

In the example of visualizations of the image of the virtual model shown in Fig. 3, on the screen there are shown images of the following mobile objects:
- images of aircraft 28 in the absence of visualization images of symbols of the current operation mode indicator that characterizes the aircraft 28 operation mode as normal, and in the absence of visualization of the frame indicator of the aerodrome supervisory control with visualized in a popup window of the brief log-book 28c of the aircraft 28, which allows one to evaluate the position of aircraft 28 as a stationary without service;
- an image of the aircraft 29 with visualized indication (intermittent high-brightness red color) of an image of a hemisphere of its indicator 29a of the current operation mode without visualization and indication of the linear image of the prescribed route in the absence of the visualized frame image indicator of the aerodrome supervisory control that allows one to evaluate the position of the aircraft 29 as stationary without request for service at operation of the aircraft in a mode other than the normal mode requiring correction of the mode code and automatic indication of hemisphere image indicator 29a;
- an image of the aircraft 30 visualized indication (red color of average brightness) of the image of the frame indicator 30b of the aerodrome supervisory control with automatic visualization of the pop-up window containing an image of the expanded log-book of the aircraft 30 (Fig. 3 not shown) when moving on the runway 19 at visualization of the linear image of the prescribed route 24 with digital images of the movement checkpoints 25, in which case the image of the aircraft 30 crossed the holding position line 26 and is on the image of the lineup take-off position 27 while waiting for takeoff permission in the absence of visualization and indication of symbol of the current operation mode indicator characterizing the operation mode of the aircraft 30 as normal, and the movement of the ship on the prescribed route as safe;
- an image of the aircraft 31 with visualized indication (intermittent high-brightness red color) of the hemisphere of its indicator 31a of the current operation mode without indication of the linear image of the prescribed route in the absence of the visualized indication of the image of the frame indicator of aerodrome supervisory control that allows one to evaluate the position of the aircraft 31, as stationary with no request for service, at the operation of the aircraft in a mode other than normal, requiring correction of the mode code and automatic indication of the image of the hemisphere of its indicator 29a by touch call of the image of the coded information block in a in a pop-up windows with indication therein of the code of the current operation mode of the aircraft 31 and a touch call in a pop-up window of the expanded log-book aircraft 31;
- an image of the aircraft 32 with visualized indication (red color of average brightness) of the image of the frame of its indicator 32b of the aerodrome supervisory control with automatic visualization of a pop-up window containing an image of the expanded log-book of the aircraft 32 (Fig. 3 not shown) moving on the steering track 18 on route 24a with digital images of movement checkpoints 25 in the visualized indication of the symbol of the current operation mode indicator of the aircraft 32 that characterizes the operation mode of the aircraft 32 as normal and the movement as safe;
- an image of a ground vehicle 33 (cleaner) with visualized display (red color of average brightness), an image of the frame indicator 33b of the aerodrome supervisory control with automatic visualization of a pop-up window including an image of the expanded log-book of means 33 (Fig. 3 not shown) moving on a taxiway 18 on a route 24b with digital movement checkpoints 25 in the absence of an image of the symbol of the current operation mode indicator of the means 33 that characterizes the means 33 as operating in the normal mode;
- an image of a ground vehicle 34 (tractor) with visualized display (red color of average brightness) with an image of a frame indicator 34b of the aerodrome supervisory control with automatic visualization of a pop-up window including an image of the expanded log-book of the means 34 (not shown in Fig. 3) moving on the steering track 18 on a linear image of the route 24c with digital image of the movement checkpoints 25 in the absence of visualization and indication of the image of the current mode operation indicator of the means 34 that characterizes the mode of operation of the means 34 as normal and the movement as safe;
- an image of a ground vehicle 35 (tanker) on an maneuvering area 17, in the absence of visualization and indication of images of the current operation mode indicators that characterizes the mode of operation of the means 35 as normal and the situation is stationary without service.

The screen 5a (Fig. 3) has no visualization and indication of link lines between the objects demonstrating the observance by all mobile objects of prescribed safe distances.

Thus the controller's attention in the first place should be given to resolving situations in movement of the aircraft 29 and aircraft 31 by stopping them with a touch action on their images on the screen 5a while determining the cause of the intermittent red indication and selection of control commands to be transmitted to the aircraft 29 and 31.

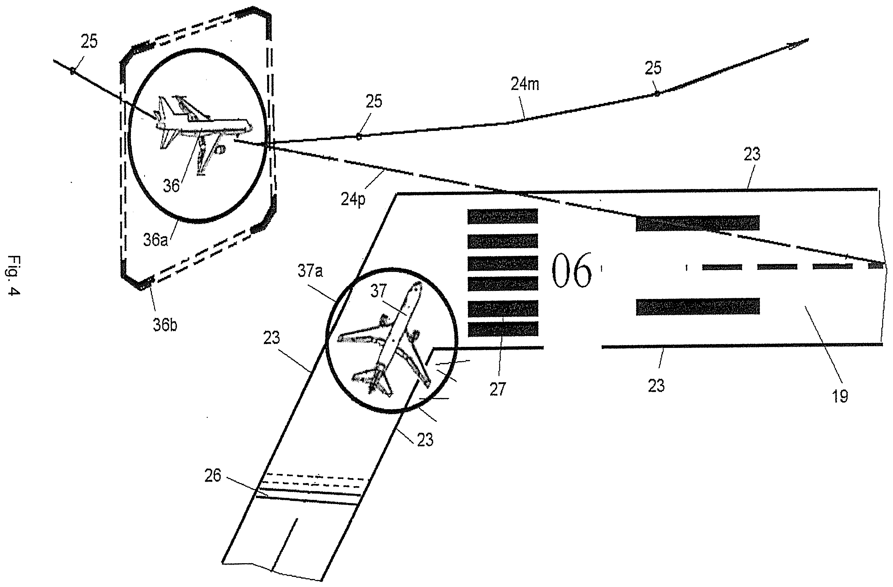

Fig. 4 illustrates an example of a fragment of visualization on the screen 5a of a virtual three-dimensional model of the real situation at the aerodrome at current time at virtual sighting of area 13₂ from the point K₇ at observation angle c₇ and approach angle a₇ (2) in the absence of meteorological objects dangerous for traffic in the aerodrome airspace and detection in the space D:
- an aircraft 36 arriving at the aerodrome with an image of visualized indication (blue color with average brightness), the scope of its indicator 36a of the current operation mode that characterizes missed approach of the aircraft 36 by a changed route 24m authorized by the with checkpoints 25 instead of the route 24p prescribed earlier with visualized indication of corner frame indicator 36b of red color and average brightness within aerodrome supervisory control;
- an aircraft 37, illegally crossed the pre-start line 26 with unauthorized occupation of runway 19, in the absence of indication of a linear image a prescribed route with intermittent indication in red color of high brightness of the hemisphere of its operation mode indicator 37a in the presence of the red image indicating to violation of the legal boundary 23 of the runway 19 in the absence of visualized indication of the frame indicator of the object which is rendered with aerodrome supervisory control.

Identification of the real situation allows one to evaluate the situation as a conflict one and controller's the attention should be focused on sending to the aircraft 37 control command to stop the aircraft 37 with the subsequent elimination of the deviations in the movement of the aircraft 37.

Thus, the method of traffic control at the aerodrome according to the invention solves the problem of identification unauthorized access to the runway and allows one to take operational measures to prevent conflicts.

According to the images on the screen should also include meteorological Objects and turbulence zones including objects of natural origin and turbulence zone of technogenic origin, with visualization of areas that are potentially dangerous for movement of mobile objects.

The presence in meteorological objects of natural origin and turbulence zones of technogenic origin of areas potentially dangerous for movement of mobile objects can be calculated using well known techniques based on measurements of parameters of the environment and the speed of movement of a turbulent flow, for example, as described in the prior art patent US 5845874 A.

Potentially dangerous meteorological objects and turbulence zones are visualized on the screen automatically with an acceptable level of transparency and an indication of hazardous areas in color with brightness and display of symbols of dangerous areas corresponding to their level of risk in the event of predicted enter of a mobile object into the buffer zone with automatic indication of the boundaries of these dangerous areas and with linking to them automatically via pop-up windows including an image a brief log-book of the object or a meteorological turbulence zone.

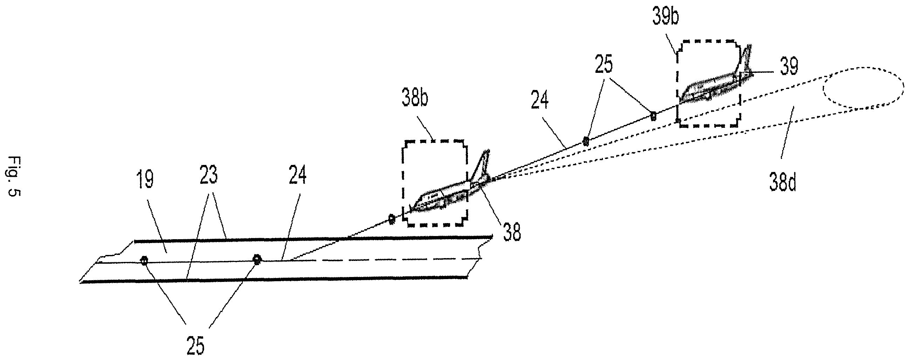

Fig. 5 illustrates an example of a fragment of visualization on the screen 5a at a current time of display of a virtual three-dimensional model of a real situation at the aerodrome at sighting the scope of view 13₃ of a virtual model from the sighting point K₃ (Fig. 2) at a observation angle C₃ (Fig. 2) and an approach angle a₃ overview (Fig. 2) in the presence in the aerodrome airspace of two aircraft 38 and 39, one after the other, with a linear image of a prescribed route on the landing glide path prescribed route 24 for landing on a runway 19 having boundaries 23 without indication of their predicted violation, with visualized indication (red color of average brightness) with images of frame corners of indicators 38b and 39b of the aerodrome supervisory control of the aircraft 38 and 39, respectively. The absence of visualization and indication of images of symbols of the current operation mode indicators 38 and 39 allow us to make a conclusion that both aircraft operate in the normal mode and the safety buffer zone (not shown) of the aircraft 38 is not in the dangerous turbulence zone 38d of wake vortices generated by the aircraft 38. The absence of visualization and indication the image of the link line between the images of the aircraft 38 and 39 characterizes the observance by the aircraft 38 and 39 a safe distance between them along the route 24.

Thus, the controller's attention may be aimed at the general monitoring of the image of the virtual model.

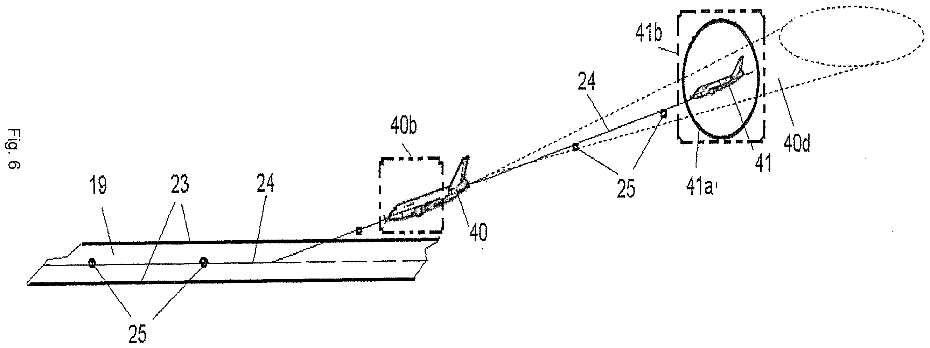

Fig. 6 illustrates an example of a fragment of visualization on the screen 5a at a current instant of time of imaging a virtual three-dimensional model of the real situation at the aerodrome at sighting the virtual area 13₃ of the virtual model from the sighting point K₃ (Fig. 2) at the approach angle c₃ (Fig. 2) and observation angle a₃ (Fig. 2) in the presence in the aerodrome airspace of two aircraft 40 and 41, one after the other, on the landing glide path of a prescribed route 24 for landing on the runway 19, having boundaries 23 without any indication of their violation, with automatic visualization and indication of an image of the symbol of the current operation mode indicator 40a of the aircraft 40, with visualized indication (red color average brightness) of the image of corners of the indicator frames 40b and 41 b of the aerodrome supervisory control of aircraft, in which case the safety buffer zone of the aircraft 41 intersects the turbulence zone in the form of vortex wakes 40d generated by the aircraft 40, and the aircraft 41 has a visualized intermittent indexation (high-brightness red color) of the hemisphere of its current operation mode indicator 41a that characterizes the alarm mode.

Thus, the controller's attention should be focused on changing the movement parameters, for example, reducing the height of the aircraft 41 for withdrawing the aircraft 41 from the vortex wake 40d.

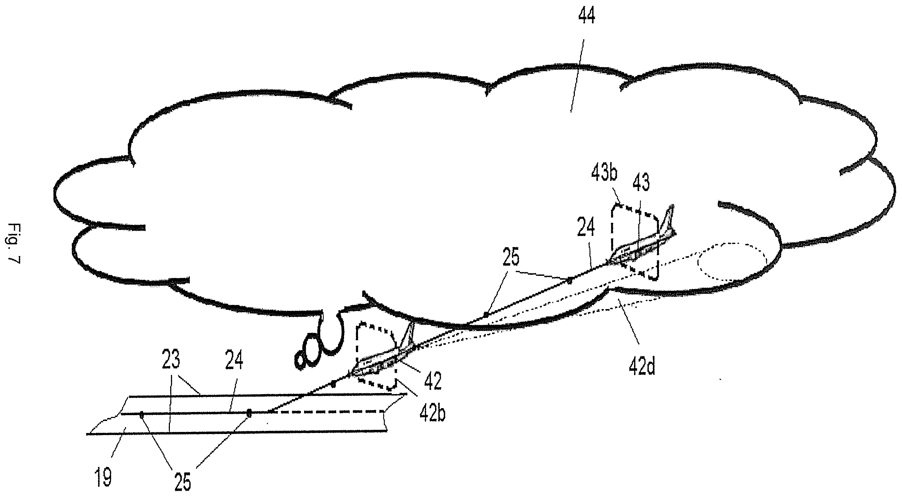

Fig. 7 illustrates an example of a fragment of visualization on the screen 5a at a current instant of time of display of a virtual three-dimensional model of a real situation at the aerodrome at sighting the scope of view 13₃ of the virtual model from the sighting point K₃ (Fig. 2) at a observation angle C₃ (Fig. 2) and an approach angle a₃ (Fig. 2) in the presence in the aerodrome airspace of two aircraft 38 and 39, one after the other, on the landing glide path prescribed route 24 for landing on a runway 19 with visualized indication (red color of average brightness) of the image of the corners of the frame indicators 42b and 43b of the aerodrome supervisory control of aircraft, the safety buffer zone of the aircraft 43 does not cross the turbulence zone in the form of vortex wakes 42d generated by the aircraft 42, and the meteorological object 44 in the form of a cloud poses no danger for movement of the aircraft 42 and aircraft 43.

Thus, the controller's attention can be given to the common monitoring and should be focused on changing the movement parameters, for example, reducing the height of the aircraft 43 for withdrawal the aircraft 43 from the vortex wake 42d.

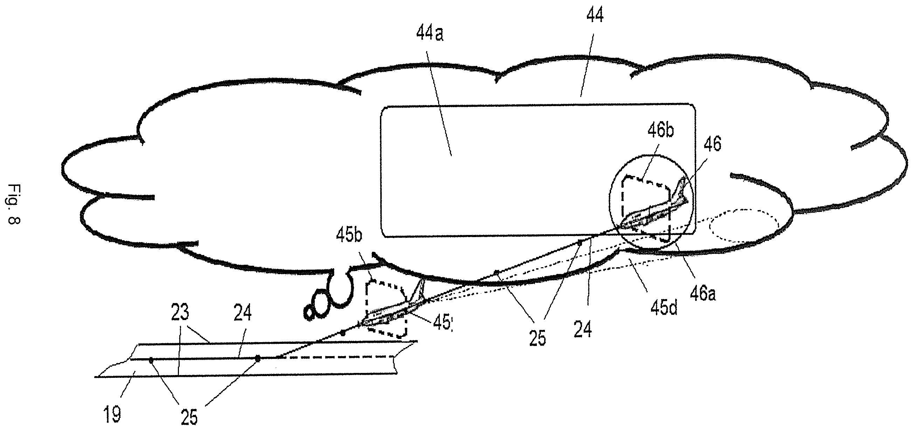

Fig. 8 illustrates an example of a fragment of visualization on the screen 5a at a current instant of time of an image of a virtual three-dimensional model of a real situation at the aerodrome when sighting the scope of view 13₃ of a virtual model from the sighting point K₃ (Fig. 2) at a observation angle C₃ (Fig. 2) and an approach angle a₃ (Fig. 2) in the presence in the aerodrome airspace of two aircraft 38 and 39, one after the other, on the landing glide path of a prescribed route 24 for landing on a runway 19 having boundaries 23 without indication of their violation, with visualized indication (red color of average brightness) of the images of the frame corners of the indicators 38b and 39b of the aerodrome supervisory control. The buffer safety zone of the aircraft 46 does not cross the turbulence zone in form of vortex wakes 45d, 45d generated by the aircraft 45 but it crosses the dangerous area 44a of clouds 44 and aircraft 46 has a visualized intermittent indication (red color, high-brightness) of the image of the sphere of indicator 46a in an alarm mode.

Thus, the controller's attention should be focused on changing the movement parameters of the aircraft 46, for example, reducing the height for withdrawal of the aircraft 43 from the dangerous area 44a to avoid the vortex wake 45d.

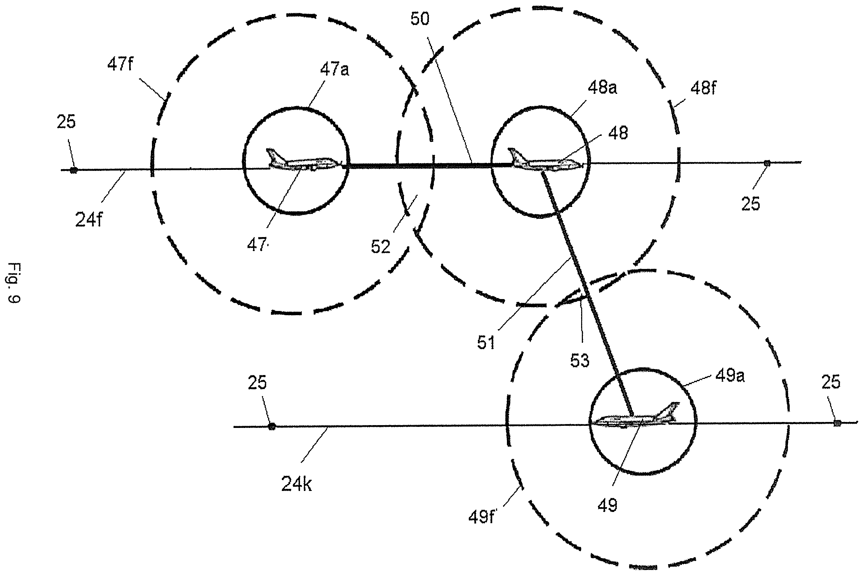

Fig. 9 illustrates an example of a fragment of visualization on the screen 5a at a current instant of time of an image of a virtual three-dimensional model of a real situation at the aerodrome when sighting the scope of view 13₃ of a virtual model from the sighting point K₃ (Fig. 2) at a observation angle C₃ (Fig. 2) and an approach angle a₃ (Fig. 2) in the presence in the aerodrome airspace of two aircraft 47 and 48 flying in one direction and the aircraft 49 in the other direction along the route 24k indicated by red color of high brightness of the images of the spheres of the indicators 47a, 48a, 48a, 49a of the current operation mode of the aircraft - alarm mode in the presence of visual indication of the image of the link line 50 between the aircraft 47 and 48 and link line 51 between the aircraft 48 and 49 that indicates violation of safe distances between mobile objects with intersection of the boundaries 52 and 53 of their safety buffer zones 47f, 48f, 49f (the spherical buffer zones 47f, 48f, 49f are usually not visualized on the screen but are shown as dotted lines to illustrate the ratio of size of buffer zones and the spheres of the current operation mode indicators) and requires urgent actions for changing the movement parameters of the aircraft to stop the indication of the link lines and transfer of the aircraft to the normal operation mode with exclusion of mutual intersection of the safety buffer zones 47f, 48f, 49f of the aircraft with no indication of the indicators 47a, 48a, 49a.

Thus, as shown in Figure 9, the method of traffic control at the aerodrome according to the invention allows one to solve the problems associated with violation of separation standards - longitudinal and vertical safe intervals between the mobile objects on the routes of movement of the mobile objects in the airspace

Thus, the method of traffic control at the aerodrome according to the invention by means of the device 1 for controlling the movement according to the invention provides visualization in the real-time dynamic mode on said screen 5a of a multi-touch monitor:
- an image of said virtual model or its part obtained from a change in position of the sighting point in space, a change in the observation angle and an image scale at a respective touch action on a definite area on the screen that enables controlled viewing of the aerodrome area and objects on it from all directions in a desired scale at image visualization;
- indication of images of the symbols of said indicators of the objects and indication of said boundaries and elements of the objects while maintaining the colors and character of the indication during the time of operation of the object in a respective mode and changing the color and character of the indication after transferring the object to another mode which provides a possibility of recognition of the situation simultaneously on several mobile and stationary objects at the aerodrome;

- images of said log-books and information blocks, visualized in automatic mode or at a respective touch action on a definite area of the screen that allows one to obtain necessary information to evaluate the real situation and to generate control commands;
- indication of said link lines between the images of mobile objects in a mode of detected or predicted conflict between them due to unacceptable deviations in the distance between them, that in combination with indication of images of symbols of said indicators provides recognition of a sequence of resolving predicted and detected conflicts at the aerodrome.

According to the invention, in the traffic control method for the identification of a real situation the controller uses the results of his touch action on a definite area of said screen providing at least:
- sighting of said virtual model or at least a scope of view selected by the controller from a desired point in space in a desired direction and scale;
- checking the condition and current operation mode of the real aerodrome areas and their boundaries;
- checking the location of the prescribed route of the mobile object at the aerodrome;
- checking the condition and operation of the radio, lighting and auxiliary equipment;
- visualization of the image of said information block on the wind direction and velocity and of the graphic indicator of the wind direction near the lineup take-off position;
- visualization of the data of the expanded log-book of the mobile object requesting aerodrome supervisory control;
- visualization of the color rendering and character of the indication of the symbol of the current operation mode indicator of the mobile object;
- beginning of rendering the aerodrome supervisory control to a real mobile object;
- stopping the movement of a real mobile object on the territory;
- cancelling permission for landing the aircraft;
- visualization of an image of a symbol of a mobile object at the touch transfer of said mobile object to the dynamic simulation mode of a predicted position of the mobile object moving along a prescribed route or modified route and/or changing its movement parameters and touch termination of this mode and visualization of the image of said character.

Thus, according to the invention, using the above-described possibilities of forming and visualization of the image of a three-dimensional virtual model of a real situation at the aerodrome on the screen at a suitable approach angle and a suitable observation angle and in a scale required for imaging and obtaining additional information at a touch action of the controller on the screen, and the information provided according to the invention in the automatic mode, the controller can monitor the implementation by mobile objects of the prescribed parameters and routes of movement and the status of the mobile objects at the aerodrome including:
- checking the type of the mobile objects that are at the aerodrome or arriving to it by the displayed image of the mobile object and by the content of their brief and expanded log-books in the pop-up windows;
- monitoring the current and predicted state of the mobile objects at the aerodrome by the presence, color and character of the current and predicted indication their current operation mode indicators and by the data of their brief and expanded log-books in the pop-up windows;
- monitoring the movement of the mobile objects at the aerodrome by the presence on the screen of linear images of non-fulfilled prescribed or authorized routes and indication of not passed checkpoints;
- monitoring the current state of the stationary objects by the presence, color and character of indication on their images on the screen, images of their boundaries, and by heir short log-books in the pop-up windows;
- monitoring safety of movement of the mobile objects at the aerodrome on the basis of analysis of the causes of automatic action of the current operation mode indicators of the mobile and stationary objects taking into account the operation mode code automatically initiated in said coded information block of said object at the touch call of said coded information block on the screen.

Furthermore, according to the invention, a touch action on the screen makes is possible to change the visualization of changes in the images of real situation at the aerodrome due to the predicted execution of the controller's control by the mobile object.

According to the invention, it is expedient to select the control commands from the group comprising at least the following commands:
- stopping the movement of the mobile object when it is on the ground;
- changing the movement parameters the mobile object on the ground location;
- Re-routing the mobile object when it is on the ground or in the air;
- permitting the mobile objects to perform movement along the route movement by controller.

Furthermore, according to the invention, the device 1 may be provided with visualization of a predicted situation at the aerodrome in the mode of dynamic simulation of a mobile object moving along the prescribed or changed route and/or at a change of its movement parameters and a touch termination of said simulation mode, and visualization of the image of said symbol.

It is preferable to transfer control commands to the mobile objects stop its movement or to permit the mobile object to move along the route authorized by the controller said commands being in a digital form and are sent using the touch action on the image of the respective mobile object on the screen.

In this case the control commands changing the movement parameters and/or changing the route of mobile object can be executed by communicating with the mobile object via the available communication data transfer channels including digital channels with prescribed changes in the image of the expanded log-book of a respective mobile object on the screen.

Those skilled in the field of data processing and programming will understand that the above-described processing of received data in the electronic computer 4 using methods data aggregation and criteria for analysis and evaluation of the state and movement of objects at the aerodrome can be accomplished using known programming technique and software complexes.

Furthermore, according to the invention the block 12 can be used for forming a list of control commands acceptable for eliminating unacceptable deviations and violations of the movement parameters of a specific mobile object at its aerodrome service by changing the its movement parameters and/or changing its movement route and for transfer these commands in a digital form to the mobile object, wherein:
- the block for evaluation, analysis and visualization of information generates a list of control commands suitable for transmission in a digital form to a definite mobile object to eliminate inadmissible deviations and violations of the movement parameters during the aerodrome service, with a possibility of visualizing said list on the screen using the touch action of the controller on the image of a respective mobile object on the screen, the controller being capable of selecting a command in said list of respective control command;
- the data input-output server is adapted to transmit a selected digital control command to the mobile object through its digital data transmission channels associated through said screen interface with the mobile object image.

According to the invention, said list can be visualized on said screen by a touch action of the controller on the image of a respective mobile object on the screen, with a possibility of selection of a suitable control command in said list and its transfer to a real mobile object in a digital form via digital communication channels and transmission of data associated with indication the image of the mobile object through interface of said screen.

Those skilled in the field of traffic control at the aerodrome understand that the above-described method of traffic control at the aerodrome according to the invention using the device 1 can be modified and advanced without departing from the scope of the claims, for instance concerning the used criteria for evaluation the safety of movement of mobile objects.

### INDUSTRIAL APPLICABILITY

Those skilled in the field of traffic control at aerodromes understand that the above-described method of traffic control at the aerodrome can be realized with the movement control device 1 for controlling the traffic at the aerodrome according to the invention using operating programs providing said data processing algorithms for analysis and evaluation of real and predicted situations at different violations of the standards of movement and operational status of objects at an aerodrome.

## Claims

1. A method for controlling the traffic at an aerodrome in real current time, wherein:
- receiving via communication channels use surveillance and traffic control information, including:
- data on the type of aircraft at the aerodrome and those forecasted for arrival, their order and schedule of takeoffs and landings and their prescribed flight tracks;
- data on the type, prescribed routes, time and area of movement of ground vehicles at the aerodrome;
- data on the real and forecasted weather conditions at the aerodrome and in the adjacent areas;
- data on operability of radio, lighting and auxiliary equipment at the aerodrome;
- analysis and systematization of the received information, for forming and visualizing the data for the traffic controller by means of a visualization and control device made in the form of a monitor with a screen and a touch control system, data on the situation at the aerodrome and on the mobile objects, said data including:
- brief and expanded log-books of aircraft containing data to be monitored by the controller;
- information on the type, parameters, status and routes of aircraft at the aerodrome;
- timetables and flight plans of aircraft at the aerodrome;
- data blocks on the real and forecasted weather conditions at the aerodrome and in the adjacent areas;
- data blocks on the operability of radio, lighting and auxiliary equipment;
- monitoring of the real situation at the aerodrome in the current real time by checking the compliance of the type, parameters and routes of said mobile objects according to the prescribed data;
- traffic control by rendering the aerodrome supervisory control to real mobile objects in accordance with a predetermined algorithm of technological service, while forming and transmitting to the mobile objects whose type, parameters and traffic routes do not meet the prescribed data, control commands for organization of their movement and resolving predicted conflict situations at the aerodrome taking into account the real meteorological conditions and criteria established by the traffic safety standards at said aerodrome,
**characterized in that:**
- said visualization device (5) is device comprising an interactive multi-touch monitor (5) with a screen and a control system providing operation of a human-machine interface;
- receiving in the real-time mode additional data on preset safety criteria at the aerodrome and the admissible deviations from the movement parameters of mobile objects with respect to the standard values;
- receiving in the real-time mode via digital communication channels additional data on the objects forming a real situation at the aerodrome using digital communication channels from ground-based detection means, from multi-position surveillance system, from mobile objects, including aircraft and ground vehicles at the aerodrome and in adjacent areas, said data including:
- data on the location of the structural elements of the aerodrome in the geographic coordinate system;
- data on the operational status of stationary ground objects including at least structures, aprons, parking areas, maneuvering area, taxiways and runways;
- data on the real current state of the mobile objects and the coordinates of their location at the aerodrome;
- data on the prescribed size and configuration of the safety buffer zone around each mobile object;
- data on the real routes of movement of the mobile objects at the aerodrome;
- data on the current condition and location coordinates of the meteorological objects and turbulence zones in the aerodrome space including meteorological objects of natural origin and the turbulence zones of an anthropogenic origin;
- processing, analysis and aggregation of the received data on the objects that form a real situation at the aerodrome in the dynamic real-time mode:
- processing the standard safety criteria of the mobile objects at the aerodrome, including aircraft and ground vehicles, and forming for each of these types of mobile objects additional information blocks, including at least:
- database of standard movement parameters of mobile objects of different types at a definite aerodrome;
- database of admissible deviation from the standard safety distances of moving mobile objects of different types at a definite aerodrome;
- database of standard parameters of buffer safety zones of mobile objects of various types;
- database of standard criteria for safety assessment of mobile objects of different types at a definite aerodrome at non-observance by a mobile object of the standard movement parameters and safe distances between the mobile objects and between mobile and stationary objects at the aerodrome;
- brief log-books are made of the stationary ground objects, containing information on their type, location and operational status;
- the coordinates of boundaries of the stationary ground objects at the aerodrome are determined;
- forming around the mobile objects their buffer safety zone having prescribed shape and size;
- forming coordinates of boundaries of the buffer zone of safety of mobile objects;
- forming three-dimensional areas of meteorological objects and turbulence zones and brief log-books comprising information blocks on the type, condition and coordinates of the movement parameters of said meteorological objects and turbulence zones;
- determining the coordinates of the boundaries of meteorological objects and turbulence zones dangerous for movement of said mobile objects at the aerodrome;
- evaluating the predicted danger for movement of the mobile objects at the aerodrome at the predicted violation of buffer safety zone boundaries of the mobile objects during their movement along the routes, including the predicted intersection of the boundaries of the buffer safety zone with the boundaries of buffer safety zones of other mobile objects and/or the boundaries of said stationary surface objects and/or the boundaries of dangerous meteorological objects and turbulence zones;
- determining the current operation mode of each of the mobile objects involved in forming the real situation at the aerodrome, on the basis of definite criteria for evaluating the predicted danger movement of the mobile objects at the aerodrome taking into account the origin of the situation, which can lead to loss of the safety level of their movements at the aerodrome in terms of conditions characterizing the operation mode of each specific object selected from the group including:
- normal mode;
- predictable alarm mode;
- alarm mode;
- emergency mode;
- detected conflict mode;
- each object involved in forming a real situation at the aerodrome has coded information blocks containing a code list of modes of operation of said object including mode codes other than the normal mode;
- providing visualization of said coded information block and automatic indication of the code of the current object by a touch call of said coded information block on said screen;
- analysis of the predicted and real situation at the aerodrome by the criteria for evaluating the risk of the predicted conflict between the mobile objects at the aerodrome, arriving and/or departing from it;
- mobile objects granted for the aerodrome supervisory control is provided with expanded support log-books including parameters of the current operation mode and state of the object at the aerodrome, and other information related to the movement of the mobile object at the aerodrome to provide its position in accordance with the requirements of the technological processes at different steps of the aerodrome supervisory control;
- the results of processing said data are used for forming in the current time dynamic mode a three-dimensional virtual model of the real situation at the aerodrome, having in the aerodrome structure at least mobile and stationary objects, characterizing the real situation at the aerodrome, while providing at least:
- coupling the checkpoint of the coordinate numeration of said virtual model to a point of the geographic coordinate system;
- a possibility of changing the orientation of said virtual model in space by turning said model as a whole or its part about said coordinate numeration checkpoint;
- a possibility of virtual sighting of said virtual model as a whole and at least a part thereof corresponding to the scope of view selected by the controller with a varying shooting angle and a varying observation angle of the sighting points located at different points in space;
- providing visualization of the images of said virtual model or its part with images of the objects involved in forming the real situation at the aerodrome resulting from said sighting of said virtual model on the screen of the interactive multi-touch monitor in the dynamic mode, with binding the coordinates of these objects to the coordinate system of said virtual model, including:
- images of the stationary ground objects including objects that may be potential generators of turbulence zones dangerous for takeoff, landing and maneuvering of aircraft and/or an obstacle to monitoring the aerodrome traffic, made with linking to said images of the stationary ground objects and the images of the corresponding brief log-books by calling them to the screen by a touch action;
- images of the parking areas, aprons, maneuvering areas, taxiways and runways at the aerodromes including their boundaries, with a possibility of indication of their elements on the screen, said images are implemented:
- with linking to the images of said territories of linear images authorized by the controller managing the routing of air and ground movement of the mobile objects with automatic visualization simultaneously of the movement of the object along the route introducing therein digital images with points of movement of the mobile object control along the route in accordance with a preset technical service algorithm in a step by step mode with subsequent automatic withdrawal of the images of the passed checkpoints and linear image sectors of the route from the screen;
- with linking to the imagery of the runway area an image of the holding take-off position and the line-up take-off position of the aircraft with a touch call of a pop-up window with an image of said information block on wind direction and velocity and a touch call to display of the graphical wind direction indicator;
- with a possibility of indication of the territory images in color with brightness and character of the indication corresponding to the current operation mode of said territory with a possibility of touch activation of said indication in case of operation of the territory in a normal mode or with automatic activation of the indication in case of operation of the territory in a mode differing from the normal mode;
- with a touch call of a popup window with an image of said coded information block including a list of codes of the object modes of operation with color indication of the code of the current operation mode differing from the normal mode;
- with a possibility of visual indication of the boundaries of said land areas in color with brightness and character of the indication corresponding to the state of the boundaries with a possibility of touch activation of said indication in case of the normal state of the boundary or with automatic activation of the indication in case of unauthorized crossing the territory by a mobile object;
- images of the mobile objects associated with digital communication channels through the interface of said screen and sending data of real mobile objects, including aircraft and ground vehicles at the aerodrome and in the adjacent areas, said images of the mobile objects including images of real mobile objects are made:
- with binding:
- a brief log-book of the mobile object with a possibility of a touch call of the brief log-book image on the screen in the pop-up window;
- an expanded log-book of a mobile object with a possibility of a touch call of an image of said log-book on the screen in a pop-up window;
- an image of the symbol of the current operation mode indicator of the mobile object with a color indication symbol image with brightness and character of the images corresponding to the current operation mode of the mobile object, and made:
- with a touch call of the image of said indicator on the screen with simultaneous activation of said symbol on the display screen in case of operation of the mobile object in a normal mode;
- with an automatic visualization of the image of said symbol of said indicator on the screen with simultaneous activation of said symbol if the mobile object is operating in a mode other than the normal mode;
- with a touch call of the image of said coded information block displayed in a popup window, with automatic color indication of the code corresponding to the current operation mode of the mobile object;
- with automatic visualization of the symbol image of said indicator on the screen with simultaneous activation of said symbol in case of receiving through said digital communication channel a request of the real mobile object for granting to it the aerodrome supervisory control;
- with a possibility of beginning of the aerodrome supervisory control of the mobile object at a touch of the symbol of said indicator shown on the screen in the mode of said request for the aerodrome supervisory control;
- an image of a virtual link line between the images of the indicator symbols in the current operation mode of the mobile objects operating in a mode of detected or predicted conflict associated with nonobservance of the prescribed safety distance between the mobile objects on the route, with automatic visualization and indication of said communication line during this conflict;
- an image of the aerodrome supervisory control of the mobile object with automatic visualization and color indication of said indicator symbol within time of submission of the aerodrome supervisory control and with automatic coupling to it of a pop-up window with the image of the expanded log-book of the mobile object escort;
- visualization of the mobile object symbol at a touch transfer of the image of said mobile object in the predicted dynamic simulation position of the mobile object mode by prescribed route and/or at a change of its movement parameters with a touch termination of said mode and visualization of the image of said symbol;
- images objects and turbulence zones, including objects and zones of natural and technogenic origin, displayed on the screen automatically with an acceptable level of transparency at their presence at the aerodrome, with a color indication of their areas that are potentially dangerous for the movement of mobile objects, the brightness and character of the indication corresponding to the level of their danger, and with automatic indication of the boundaries of these dangerous areas in the event of predicted ingress therein of the mobile object buffer zone, with linking to said images of automatically pop-up windows with an image of said brief log-books of meteorological objects and turbulence zones, respectively;
- said images are changed in accordance with the change in the position of the sighting point in space by changing the shooting angle and the observation angle of said virtual model as a whole or its part as a result of the corresponding touch impact said screen;
- providing a change in the automatic mode of the character and color of said indication of images of these objects and their elements and symbols of said indicators when changing the operation mode of these objects;
- monitoring of the real situation at the aerodrome is carried out on the basis of observation of images of said virtual model or its part on said multi-touch screen in the dynamic mode said images and said information, wherein:
- using touch actions on a definite area of the screen there are selected sighting points, shooting angle, observation angle and a map scale of said virtual model or its part on said screen, which are acceptable for identification and monitoring of the displayed current situation in the scope of view selected by the controller;
- monitoring the compliance by the mobile objects of the prescribed parameters and traffic routes and the state of the mobile objects at the aerodrome by the presence, color and character of display of the images of symbols of said indicators and said elements of the images of the objects displayed on the screen in automatic mode, and according to said log-books and information blocks displayed on the screen in automatic mode or touch action on a certain area of the screen;
- detecting violation of a prescribed safe distance between the mobile objects as they move at the aerodrome by the presence on the screen of an image link line shown in the automatic mode;
- the control of the movement of the mobile objects on the aerodrome is carried out in a step by step mode with formation and transmission to the module objects of control commands suitable for execution of technological processes when serving a definite mobile object in the real situation at the aerodrome, formed on the basis of observation on the screen of predicted changes in the actual situation at the aerodrome due to the predicted execution of the control signals by the mobile object wherein the effectiveness of execution of the control commands to eliminate unacceptable deviations and disturbances in the modes other than the normal mode, is estimated at least by a stop of the automatic indication and imaging in the imaging operation mode disappearance of indicators images of the mobile objects on the screen.

2. The method according to claim 1, **characterized in that** said received additional data on the objects forming a real situation at the aerodrome include at list:
- data on the space configuration and on the terrain relief at the aerodrome areas;
- data on the spatial dimensions and location of surface structures that may be potential generators of turbulence zones, dangerous for the movement of aircraft and ground vehicles, and/or may interfere with the aerodrome monitoring;
- data on the coordinates of real parking areas, aprons, maneuvering areas, taxiways and runways at the aerodrome and its boundaries;
- data on the type, location and parameters of the meteorological objects and turbulence zones in the aerodrome space and areas that are dangerous for take-off and landing operations of the aircraft and for movement of aircraft and ground vehicles at the aerodrome and in the adjacent areas;
- data on the type and location of each mobile object that is at the aerodrome and arriving thereto;
- data on the type and location of the aircraft and ground vehicles which are suitable for communication with them through the associated digital communication channels and screen interface;
- data on the type and location of aircraft and ground vehicles having deviations in their control system, impeding the operation of the associated digital communication channels.

3. The method according to claim 1, **characterized in that** the conditions characterizing the operation of each of said mobile object include:
- violation a sequence and scheduled takeoffs/landings by a mobile object;
- violation by a mobile object of the start of the aerodrome supervisory control to be given to said object;
- violation of the standards of movement by a mobile object;
- nonobservance by a mobile object of a prescribed route;
- nonobservance by a mobile object of a prescribed distance between mobile objects on the route;
- nonobservance by a mobile object of a prescribed duration of its stay on the ground territory;
- nonobservance by a mobile object of a prescribed area of its movement at the aerodrome;
- predicted trespass buffer safety zones by mobile objects;
- violation of the operational status of ground stationary objects and violation of the boundaries.

4. The method according to claim 1, **characterized in that** the criteria for evaluated safety of the mobile aircraft and ground vehicles at the aerodrome include:
- criteria for evaluating the current operation mode of said aerodrome areas according to their location and condition, including:
- normal operation mode without restrictions of movement at the aerodrome;
- predictable alarm or an alarm mode while limiting a possibility of movement at the aerodrome;
- an emergency mode when banning the movement at the aerodrome;
- detection of conflict at movement of the mobile objects;
- criteria for evaluating the current operation mode of radio, lighting and auxiliary equipment according to their technical condition, including the normal mode, while providing traffic safety for mobile objects in the location of said equipment, and emergency mode in other cases;
- criteria for evaluating the current operation mode of real mobile objects in accordance with their status, parameters of their movement and the state of the buffer safety zones prescribed to them, including:
- normal mode when a mobile object carries out prescribed movement parameters along a prescribed route without violating the boundaries of its buffer zone;
- predicted alarm mode when a mobile object cannot comply with the movement parameters at predicted time along the prescribed route and/or predicted trespass of its buffer zone;
- an alarm mode due to nonobservance by the mobile object of prescribed movement parameters of a prescribed route, and/or a prescribed sequence of movements and/or in violation of the limits of its buffer zone;
- an emergency mode when the mobile object cannot move;
- a mode of detected conflict when a mobile object can not comply with the prescribed movement parameters without disturbing the state of another mobile object or conditions of safe movement at the aerodrome;
- criteria for evaluating the state and movement parameters of meteorological objects and turbulence zones for safety movement of mobile objects of a definite type in the location of the dangerous areas of meteorological objects and turbulence zones..

5. The method according to claim 1, **characterized in that** provide continuous visualization of images of said virtual model or its part including the images of the mobile and stationary objects obtained due to a smooth change of the position of said sighting point in the area, a smooth change of the shooting angle, observation angle and map scale at a corresponding action on the touch screen.

6. The method according to claim 1, **characterized in that** provide the fragmented visualization of the images of said virtual model or its part including images of the mobile and stationary objects resulting from a discrete change in the position of said sighting point in space, a discrete change of the shooting angle, a observation angle and a map scale at a corresponding touch effect on a certain area of the screen.

7. The method according to claim 1, **characterized in that** provide automatic change of color, brightness and character of the image of said objects and/or their components and display of said symbols and their indicators in accordance with the change of the operation mode of the objects.

8. The method according to claim 1, **characterized in that** the symbols of indicators of the current operation mode of the mobile objects located at the aerodrome and in the adjacent areas are made in the form of translucent hemispherical surrounding the images of said object on the screen, and with color indication of said hemispheres at the following brightness and character of indication:
- intermittent indication of a yellow color of average brightness for a mobile object in a stationary state waiting start of its aerodrome supervisory control after sending a respective request to the controller;
- intermittent indication of a red color of high brightness for a mobile object in an operation mode other than the normal mode;
- continuous indication of a blue color of average brightness for a mobile object in a stop position by the controller command.

9. The method according to claim 1, **characterized in that** the symbols of indicators of the current operation mode of aircraft at their location in the aerodrome airspace and in the adjacent areas are made in the form of translucent sphere surrounding the images of the aircraft on the screen, and providing color indication of said spheres at the following brightness and character of the indication:
- intermittent red-color indication of high brightness for a mobile object in an operation mode other than the normal mode;
- continuous blue-color indication of average brightness for an aircraft in the flight condition in the airspace of the aerodrome and surrounding areas with at a second request for permission to land after the controller had cancelled the permission to land by the originally prescribed route.

10. The method according to claim 1, **characterized in that** the image of the indicator for the aerodrome supervisory control of the mobile object is made in the form of a transparent rectangular frame with corners enveloping the image of the mobile object on the screen, and a continuous indication of said corners is provided in a red color of average brightness at the aerodrome supervisory control.

11. The method according to claim 1, **characterized in that** the indication of the image of said link line is provided in the form of continuous red-color indication.

12. The method according to claim 1, **characterized in that** the intermittent red color indication on the screen is accompanied with sound signals at the controller workplace.

13. The method according to claim 1, **characterized in that** for identifying the real situation the controller acts on a definite area of said touch us to provide the following:
- sighting of said virtual model or at least a scope of view selected by the controller from a desired point in space in the desired direction and scale;
- checking the condition and current modes of operation of the real aerodrome areas and their boundaries;
- checking the location of the prescribed route of the mobile object at the aerodrome;
- checking the condition and operation of the radio, lighting equipment and accessories;
- visualization of the image of said information block on the wind direction and velocity, and wind direction graphic indicator at the lineup takeoff position;
- visualization of the log-book data of the mobile object requesting aerodrome supervisory control;
- visualization of color and character of the symbol of indication of the current operation mode of the mobile object;
- providing the real mobile object with aerodrome supervisory control;
- stopping the movement of real mobile object on the territory;
- cancelling permission on landing the aircraft;
- visualization of the image of the symbol of the mobile object at a touch transfer of said mobile object to the dynamic simulation mode of predicted position of the mobile object moving along the prescribed or changed route and/or when changing its movement parameters with touch termination of said simulation mode and visualization of the image of said symbol.

14. The method according to claim 1, **characterized in that** the control of the mobile objects parameters, prescribed routes and states at the mobile objects at the aerodrome including at least:
- checking compliance of the types of the mobile objects staying at the aerodrome or arriving to the aerodrome by images displayed on the screen and by the content of their brief and expanded log-books in pop-up windows;
- monitoring the current and predicted state of the mobile object at the aerodrome by the presence, color and character of the current and predicted indications of the symbols of their current operation mode indicator on the screen and according to their brief and expanded log-books in the pop-up windows;
- monitoring the movement of the mobile objects at the aerodrome by the presence on the screen of images of non-passed checkpoints in the linear images of unfulfilled routes prescribed or authorized by the controller;
- monitoring the current state of the stationary objects by the presence, color and character of indication of their images and visualizing their boundaries on the screen according to their brief log-books in the pop-up windows;
- monitoring safety of movement of the mobile objects at the aerodrome on the basis of the analysis of causes of the automatic indication of images of symbols of the current operation mode indicator of the mobile and stationary objects taking into account the operation mode code automatically actuated in said coded information block of said object using the touch screen to display the coded information block on the screen.

15. The method according to claim 1, **characterized in that** the control commands are selected from the group including at least the following commands:
- cancelling permission to the aircraft of landing by a prescribed route with re-approaching by the prescribed route;
- stopping movement of the mobile object when it is on the ground;
- changing the movement parameters of the mobile object;
- re-routing the mobile object;
- permitting the mobile objects to move along the route authorized by the controller.

16. The method according to claim 1, **characterized in that** provide to send digital control commands to a mobile object to stop its current movement along the route and to permit the movement authorized by the controller touching the image of the respective mobile object on the screen.

17. The method according to claim 1, **characterized in that** provide the possible to use communication channels for sending to a mobile object control commands changing the movement parameters of the mobile object and/or sending data while making appropriate changes in the respective mobile object expanded log-book on the screen.

18. The method according to claim 1, **characterized in that** provide the following in real time:
- setting a list of control commands suitable for sending them in a digital form to definite mobile object to eliminate deviations and violation of the movement parameters at the aerodrome supervisory control;
- visualization of said list of control commands on a touch screen by touch actions of the controller on the image of the symbol of the mobile object indicator at the aerodrome supervisory control;
- a possibility of touch selection of a control command from said list;
- transmission of the selected control command in a digital form to a real mobile object through digital communication channels and transfer the data associated with the image of the mobile object through the interface of said screen.

19. A device for traffic control at the aerodrome made in the form of hardware-software complex including at least the following:
- an input-output server (2) comprising:
- a data receiving and transmitting device comprising a system of communication channels with a traffic control and a surveillance real-time system providing:
- receiving current information from the traffic control and surveillance system, said information including:
- data on the type of aircraft at the aerodrome and expected for arrival, data on the order and schedule of takeoffs/landings and their prescribed traffic routes;
- data on the type, prescribed routes, time and area of movement of the ground vehicles at the aerodrome;
- data on the real and forecasted weather conditions at the aerodrome and in the adjacent areas;
- data on the operability of radio, lighting and auxiliary equipment at the aerodrome;
- transmitting control commands to the mobile objects whose type, parameters and traffic routes do not meet the prescribed data for organization of their movement and for resolving conflicts at the aerodrome taking into account the real meteorological situation at the aerodrome supervisory control of the mobile objects at the aerodrome;
- an electronic computer (4) comprising a data aggregation unit (11) providing processing and classification of received data and providing:
- generation of brief and expanded log-books, including data to be checked by the controller and information on the type, parameters, status and routes of the aircraft at the aerodrome;
- forming schedules and flight plans of aircraft at the aerodrome;
- forming data blocks on the real and forecasted weather conditions at the aerodrome and in the adjacent areas;
- forming data blocks on the operability of radio, lighting and auxiliary equipment;
- a visualization and control device (5) connected to said electronic computer (4) of the I/O server (2) arranged at the controller's workplace and configured as a monitor with a touch screen,
**characterized in that** said traffic control device (1) is adapted to perform the above process of traffic control at the aerodrome according to any claims 1-18, at the same time:
- the visualization and control device (5) is made as an interactive multi-touch monitor (5) with a screen (5a) and a control system that provides a human-machine interface;
- said data receiving and transmitting device (3):
- additional is adapted to receive in real time data on preset traffic safety criteria at the aerodrome and data on admissible deviations of the movement parameters of the mobile objects from standard values;
- additional said device further includes a system of digital communication channels (6-10) with terrestrial detection means, with a multi-position surveillance system with mobile objects, including aircraft and ground vehicles on the aerodrome (B) and in the adjacent areas providing reception in real-time mode of data on the objects that create real situation at the aerodrome, including at least:
- data on location of the of the aerodrome structural elements in the geographic coordinate system;
- data on the operating condition of the stationary ground objects including buildings, aprons, maneuvering area, taxiways and runways;
- data on the actual current state of mobile objects and their location at the aerodrome;
- data on the prescribed size and configuration of the safety buffer zone around each mobile object;
- data on the real routes of movement of the mobile objects at the aerodrome;
- data on the current condition and coordinates of location of meteorological objects and turbulence zones in the aerodrome space including meteorological objects of natural origin and the turbulence zones of anthropogenic origin;
- it is further adapted for provision of the mobile objects with digital information associated with their movement at the aerodrome;
- said data aggregation unit (11) of said electronic computer:
- additional is adapted to perform in a dynamic real-time processing and aggregation of the received data about the objects that creating a real situation at the aerodrome;
- additional is adapted to process standard safety criteria of the mobile objects at the aerodrome, including aircraft and ground vehicles, and to form for each type of the mobile objects involved in the creation of the real situation at the aerodrome, additional information blocks including at least:
- a database of specified movement parameters of the mobile objects of different types at a definite aerodrome;
- a database of allowable deviation from the regulatory safety distances when moving objects of different types at a definite aerodrome;
- a database of standard parameters of the safety buffer zones of the mobile objects of different types at a definite aerodrome;
- a database of criteria for safety assessment of mobile objects of different types at a definite aerodrome at non-observance by the mobile object of specified movement parameters and/or a admissible safe distance between mobile objects and between mobile and stationary objects at the aerodrome;
- brief log-books of said stationary ground objects, containing data on their type, location and operating condition;
- said electronic computer (4) further comprises a unit (12) for evaluation, analysis and visualization of the information provides receiving the data from said data aggregation unit (11) in real-time dynamic mode, said information is on the objects creating real situation at the aerodrome and performing at least the following operations:
- defining the boundaries of said stationary ground objects at the aerodrome;
- forming a buffer safety zone having a prescribed shape and size around said mobile objects;
- defining boundaries of the safety buffer zones of the mobile objects;
- forming three-dimensional meteorological objects, turbulence zones and brief log-books containing information on the type, state, coordinates and movement parameters of said objects and meteorological turbulence zones;
- determining the coordinates of the boundaries of the meteorological objects and turbulence zones dangerous for movement of said mobile objects at the aerodrome;
- assessment of the predicted danger of movement of mobile objects at the aerodrome at a predicted trespass of the safety buffer zones of the mobile objects as they move along the routes, including predicted intersection of the boundaries of their safety buffer zone with the boundaries of the safety buffer zone with the boundaries of safety buffer zones of other mobile objects and/or of other said stationary ground objects and/or the boundaries of dangerous areas of meteorological objects and turbulence zones;
- determining the current operation mode of the objects characterizing the real situation at the aerodrome, on the basis of preset criteria for evaluating the predicted danger of movement of mobile objects at the aerodrome taking into account an unexpected situation that can lead to loss of the safety of movement of the mobile objects at the aerodrome, under conditions characterizing the operation mode of each said object selected from the group including:
- normal mode;
- predictable alarm mode;
- alarm mode;
- emergency mode;
- detected conflict mode;
- forming coded information blocks containing a list of codes of operation mode other than normal mode for each of the objects involved in forming real situation at the aerodrome, with a possibility of visualizing said coded information block and automatic indication of the current object operation mode code using the touch screen to monitor the coded information onto said screen;
- analysis of the predicted and real situation at the aerodrome according to the criteria assessing the risk of the predicted conflict between the mobile objects located at the aerodrome and those arriving and/or departing from it;
- forming expanded log-books for mobile objects to be allowed to the aerodrome supervisory control, containing parameters of the current operation mode and the state of the mobile object at the aerodrome, and other information related to the movement of the mobile object at the aerodrome to provide its position in accordance with the requirements of technological processes at various steps of its aerodrome supervisory control;
- forming of a real-time dynamic three-dimensional virtual model of the real situation at the aerodrome, in the aerodrome structure containing structural elements, mobile and stationary objects, said model characterizing the real situation at the aerodrome while providing at least:
- linking the checkpoint of beginning of the coordinate numeration of said virtual model to a specific geographic coordinate system point;
- a possibility of changing the orientation of said virtual model in space by turning said model as a whole or its part about said checkpoint dead reckoning;
- a possibility of virtual sighting of said virtual model as a whole and at least a part thereof corresponding to the scope of view selected by the controller with various project view and a different observation angle from viewing points located at different points in space;
- a possibility of visualization in the dynamic mode on a screen of an interactive multi-touch monitor of said virtual model or its part with images of the objects involved in forming real situation at the aerodrome resulting from said viewing of said virtual model, with linking the coordinates of said objects to the coordinate system of said virtual model, including:
- images of stationary ground objects including objects that may be potential generators of turbulence zones, dangerous for take-off, landing and maneuvering of aircraft, and/or be obstacles to monitor traffic at the aerodrome, made with linking to said images of stationary ground objects of said brief log-books with a possibility of touch call to the screen;
- images of real parking areas, aprons, maneuvering areas, taxiways and runways of aerodromes, including their boundaries, with a possibility of indication of their elements on the screen, said images being made:
- with linking to the images of said land areas and linear images of the routes of air and surface movement of mobile objects authorized by the controller with their automatic visualization simultaneously with the beginning of movement of the object along the route, with built-in digital images of traffic checkpoints of the of said mobile object along the route in accordance with a predetermined algorithm of technological service in a step-by-step mode with automatic withdrawal from the screen of the passed checkpoints and passed areas of the linear image of the route;
- with linking to the image of the territory of said runway prior of the holding position line and the lineup takeoff position of the aircraft with a touch call of the pop-up window with the image of said information block about wind direction and velocity and touch call of the wind direction graphical indicator;
- with a possibility of indication of said images of the territories in color with brightness and character of the indication corresponding to the current operation mode of said territory with a possibility of touch call of said indication in case of operation of the territory in the normal mode or with automatic activation of the indication in case of operation of the territory in a mode other than the normal mode;
- with a possibility of a touch call of a popup window with an image of said coded information block containing a list of codes of operating conditions of the object with a color indication of the current operation mode other than the normal mode;
- with a possibility of visualization of the indication of the image of the boundaries of said territories in color with brightness and character of indication corresponding to the state of the boundaries with a possibility of touch activation of said indication in case of the normal state of the boundaries or with automatic activation of the indication in case of unauthorized boundary crossing territory by a mobile object;
- images of mobile objects, including aircraft and ground vehicles present at the aerodrome or arriving at the aerodrome associated through said screen interface with digital communication and data transmission of real mobile objects, said display of the mobile objects including an image of real mobile objects and are made:
- with linking to them:
- a brief log-book of a mobile object with a possibility of a touch call of the brief log-book image in a pop-up window on the screen;
- an expanded log-book of a mobile object with a possibility of a touch call of the expanded log-book image in a pop-up window on the screen;
- an image of the symbol of the current operation mode indicator of the mobile object with color indication of the symbol with brightness and character of indication corresponding to the current operation mode of the mobile object, and made:
- with a possibility of touch call of its image to the screen with simultaneous indication of said symbol when the object operates in the normal mode;
- with automatic visualization of its image on the screen with simultaneous indication of said symbol on the screen in case of operation of the mobile object in a mode other than the normal mode;
- with a possibility touch call of the image of said coded information block displayed in a popup window with automatic color indication of the code corresponding to the current operation mode;
- with automatic visualization of the image of the symbol of said indicator on the screen with simultaneous indication of said symbol in case of receipt through said digital communication channel a request of the real mobile object on the beginning of its aerodrome supervisory control;
- with a possibility of starting the aerodrome supervisory control of the mobile object by touching the image of said symbol of said indicator displayed on the screen in the mode of request for said service;
- images of the virtual link line between the images of the symbols of the indicators of the current operation mode of the mobile objects operating in the detected mode or in the mode of predicted conflict associated with non-observance of the prescribed safety distance between the mobile object on the route with automatic visualization and indication of said image of the link line during said conflict;
- image of the symbol of the indicator of the aerodrome supervisory control of the mobile object with automatic visualization and color indication of said indicator at the aerodrome supervisory control time and with automatic reference to the pop-up window with the mobile object expanded log-book image;
- symbol of the mobile object image at touch transfer of said mobile object in the dynamic simulation mode at a predicted position of the mobile object moving along a prescribed or changed route and/or its changed movement parameters and a touch the termination of said mode and visualization of the image of said symbol;
- images of metrological objects and turbulence zones including objects and zones of natural and technogenic origin, visualized on the screen automatically with an acceptable level of transparency at their presence at the aerodrome, with a color indication of their areas that are potentially dangerous for the movement of mobile objects with brightness and character of the indication corresponding to their level of danger, and automatic indication of the boundaries of said dangerous areas in the event of predicted penetration buffer zone of the mobile object with linking to the images of the automatic pop-up windows with an image of said brief log-books of the meteorological object and the turbulence zones, respectively,
at the same time said traffic control device (1) is adapted for presentation on a screen of a multi-touch display in the real-time dynamic mode:
- said images of said objects of said virtual model or a part thereof resulted from said sighting and in accordance with the conditions of their visualization on the screen, with automatic change of said images in accordance with the position of said sighting point in space, a change the shooting angle and shooting angle of said virtual model as a whole or its part as a result of respective touch on said screen;
- images of said symbols of the indicators, route lines, checkpoints, link lines, said log-books and information blocks in accordance with the conditions of their display on the screen in an automatic mode and at a touch call on the screen;
- indication of said images of the objects and their elements and said images of the symbols of their indicators in automatic mode in accordance with said conditions of their indication while maintaining indication color and character during the operation of the object in a respective mode with a change in the color and character of indication after transferring the object to another mode;
- images of predicted changes in the real situation at the aerodrome due to the predicted execution by the mobile object of control commands of the controller in the real situation at the aerodrome.

20. The device according to claim 19, **characterized in that** said received additional data on the objects forming the real situation at the aerodrome include at least the following:
- data on the space configuration of the terrain relief at the aerodrome, spatial dimensions and location of the ground objects, which may be potential generators of turbulence zones, dangerous for the movement of aircraft and ground vehicles, and/or interfere the observation of the movement at the aerodrome;
- data on the coordinates of the real parking areas, aprons, maneuvering areas, taxiways and runways at the aerodrome and its boundaries;
- data on the type, location and state parameters of meteorological objects and turbulence zones in the aerodrome space and areas that are dangerous for take-off and landing procedures of aircraft and for movement of aircraft and ground vehicles at the aerodrome and in the adjacent areas;
- data on the type and location of each mobile object staying at the aerodrome and arriving to it;
- data on the type and location of aircraft and land that can be controlled through associated digital communication channels and data transmission and are suitable for data transfer;
- data on the type and location of aircraft and ground vehicles having in their control system deviations impeding their control through the associated digital communication channels and data transfer.

21. The device according to claim 19, **characterized in that** the criteria characterizing the operation mode of each mobile object, includes at least:
- violation by a mobile object of the sequence and schedule of take-offs/landings;
- violation by a mobile object of the time of submission of aerodrome supervisory control;
- non-observance of the movement standards by a mobile object;
- non-observance of the prescribed route by a mobile object;
- non-observance of the prescribed distance between the mobile objects on the route;
- non-observance of the prescribed duration of staying of a mobile object on the ground and/or non-observance of a prescribed area of its location or movement at the aerodrome;
- predicted trespass of the safety buffer zones of mobile objects;
- violation of the operational status of stationary ground vehicles and the violation of their boundaries.

22. The device according to claim 19, **characterized in that** the unit (12) for evaluation, analysis and visualization of information adapted for evaluation of the safe movement of mobile aircraft and ground vehicles at the aerodrome includes:
- criteria for evaluating the current mode of operation of said aerodrome areas according to their location and condition including:
- normal operation mode without restrictions for movement of objects at the aerodrome;
- predictable alarm mode or alarm mode for the territory with limited movement thereon;
- emergency mode when at banning movement on it or at detection of conflict situation at the aerodrome in connection of said banning;
- criteria for evaluating the current operation mode of the radio, lighting and auxiliary equipment according to their technical condition including the normal mode while providing safety of movement of the mobile objects in the area of location of said equipment, and the emergency mode;
- criteria for evaluating the current operation mode of real mobile objects in accordance with their state, parameters of their movement and the state of the safety buffer zones prescribed to them including:
- a normal mode when the mobile object implements the prescribed movement parameters along the prescribed route without violating the boundaries of its buffer zone;
- predicted alarm mode at a forecasted time the mobile object cannot perform the movement parameters along the prescribed route and/or at predicted trespass of its buffer zone;
- an alarm mode when a mobile object violates the prescribed movement parameters along a prescribed route and/or a prescribed sequence of movements and/or violates the limits of its buffer zone;
- emergency mode in case of impossibility of movement of a mobile object;
- a detected conflict mode detection when a mobile object can not comply with the prescribed movement parameters without violation of the state of another mobile object or conditions of safe movement at the aerodrome;
- criteria for evaluating the status and movement parameters of meteorological objects and turbulence zones for safety movement of mobile objects of a definite type in the location of the hazardous areas of said meteorological objects and turbulence zones.

23. The device according to claim 19, **characterized in that** the traffic control device is capable of continuous visualization of the images of said virtual model or its parts including images of mobile and stationary objects resulting from a smooth change of the position of said sighting point in space, a smooth change of the shooting angle, observation angle and display scale at a respective action on the touch screen.

24. The device according to claim 19, **characterized in that** the traffic control device is made with a possibility of fragmented visualization of the images said virtual model or any part thereof including the images of the mobile and stationary objects resulting from a discrete change in the position of said sighting point in space, a discrete change of the shooting angle, observation angle and image scale at a respective action on the touch screen.

25. The device according to claim 19, **characterized in that** the traffic control device is capable of visual indication of images of indicators of the current operation mode of mobile and stationary objects on the ground disposed in the form of translucent hemisphere surrounding the images of said objects and in correspondence with the state and movement of the mobile object, there is provided color indication of said hemispheres at the following brightness and character of the indication:
- intermittent yellow color indication of average brightness for a mobile object in a fixed wait state of starting its aerodrome supervisory control after sending a relevant request to the controller;
- intermittent red color high-brightness indication for a mobile object in an operation mode other than the normal mode;
- continuous blue color average-brightness indication of the mobile object stopped by a controller command.

26. The device according to claim 19, **characterized in that** the traffic control device provides visualization of the images of the indicators of the current operation mode of the aircraft in the aerodrome airspace and in the adjacent areas in the form of translucent sphere surrounding the images of the aircraft, and in accordance with the state and movement of the aircraft the color indication of said spheres is provided at the following brightness and character of the indication:
- intermittent red color high-brightness indication for a mobile object in an operation mode other than the normal mode;
- continuous blue color average-brightness indication for an aircraft in the flight condition in the aerodrome airspace and in the surrounding areas at a missed approach after the controller has cancelled the landing clearance by the originally prescribed route.

27. The device according to claim 19, **characterized in that** in the traffic control device the visualization of the image of the indicator of the aerodrome supervisory control of a mobile object is made as a transparent rectangular frame with visualized angles covering the image of said mobile object, with continuous indication of said angles in red color of the average brightness during said aerodrome supervisory control.

28. The device according to claim 19, **characterized in that** the traffic control device said indication of the link line in its imaging is performed in a continuous red color indication mode.

29. The device according to claim 19, **characterized in that** the intermittent red color indication on the screen is accompanied with sound signals at the controller workplace.

30. The device according to claim 19, **characterized in that** the traffic control device has been adapted for visualizing the results of the touch actions of the controller at a specific area of said screen (5a) provides at least:
- sighting said virtual model or at least a scope of view selected by the controller, from the desired point in space in desired direction and scale;
- checking the condition and current operation mode of the real aerodrome areas and their boundaries;
- checking the location of the prescribed route of the mobile object at the aerodrome;
- checking the condition and operation of the radio, lighting and auxiliary equipment;
- visualization of the image of said information block on the wind direction and velocity, and graphic wind indicator near the lineup take-off position;
- visualization of the expanded log-book of the mobile object requesting aerodrome supervisory control;
- visualization of color and character indicate of the indication of the symbol of the current operation mode indicator of the mobile object;
- beginning of rendering the aerodrome supervisory control to a real mobile object;
- stopping the movement of the real mobile object on the territory;
- cancelling the rending clearance for an aircraft;
- visualization of the mobile object symbol at a touch transfer of said mobile object in the predicted dynamic simulation position of the mobile object moving along a prescribed or changed route and/or at a change of its movement parameters with a touch termination of said mode and visualization of the image of said symbol.

31. The device according to claim 19, **characterized in that** said digital control command list includes at least the following commands:
- cancel of the landing clearance for an aircraft on a prescribed route with a command for a second approach along the route authorized by the controller;
- stopping the movement of the mobile object when it is on the ground;
- changing the movement parameters of the mobile object;
- re-routing the mobile object;
- permission to the mobile objects to perform movement along the route authorized by the controller.

32. The device according to claim 19, **characterized in that** it is possible to transmit to the mobile object control commands for changing the movement parameters and/or for changing the route of the mobile object through communication and data transfer channels with a simultaneous change in the image of the extended log-book of a respective mobile object on the screen.

33. The device according to claim 19, **characterized in that** provide a passivity of transferring to the mobile object of control commands to stop the movements on the route authorized by the controller in digital form by touching the image of the respective mobile object on the screen

34. The device according to claim 19, **characterized in that** in the traffic control device:
- the unit (12) for evaluation, analysis and visualization of information provides forming a list of control commands suitable for removal of unacceptable deviations and violations of movement parameters of a specific mobile object at its supervisory control with a possibility of visualizing said list on the screen using the touch input by the controller to display an indicator of the corresponding mobile object at the aerodrome supervisory control with touch selection by controller of the respective control command in said list;
- the I/O data transmission server (2) provides transmission of a selected control command via digital data transfer channels to the mobile object with its display on the screen.
